# EUROPEAN PATENT APPLICATION

(11) **EP 4 734 588 A1**
(43) Date of publication of application: **29.04.2026**
(21) Application number: 23942691.9
(22) Date of filing: 25.06.2023
(51) Int. Cl.: H04W 24/02

(54) **INFORMATION SENDING METHOD, INFORMATION RECEIVING METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: WU, Shijuan, Beijing 100085 (CN)
(74) Representative: Dehns Germany Partnerschaft mbB
(86) International application number: PCT/CN2023/102232
(87) International publication number: WO 2025/000160

(57) **Abstract**

The present disclosure relates to the technical field of communications, and in particular to an information sending method, an information receiving method, a terminal, a network device, a communication device, and a storage medium. The information sending method comprises: determining first information on the basis of a power offset parameter; and sending the first information to a network device, wherein the first information is used for determining channel state information. According to the present disclosure, the network device can more accurately determine the channel state information, thereby facilitating subsequent PDSCH scheduling.

## Description

### TECHNICAL FIELD

The present disclosure relates to the field of communication technology, and in particular, to an information sending method, an information receiving method, a terminal, a network device, a communication device, and a storage medium.

### BACKGROUND

In order to enable the network device to understand the channel state, the terminal can receive a Channel State Information-Reference Signal (CSI-RS) and generate channel state information based on the channel state information reference signal, and then send the channel state information to the network device. The network device can determine the channel state based on the channel state information in order to make appropriate configuration.

However, some technical problems exist in the current method of determining channel state information, causing the inaccurate channel state information, thereby making it difficult for network devices to accurately determine the channel state.

### SUMMARY

These embodiments of the present disclosure provide information sending and receiving methods and terminals, network devices, communication devices and storage medium to solve technical problems in related technologies.

According to a first aspect of some embodiments of the present disclosure, an information sending method is provided, where the method is executed by a terminal and includes: determining first information based on a power offset parameter; and sending the first information to a network device, where the first information is used for determining channel state information (CSI).

According to a second aspect of some embodiments of the present disclosure, an information receiving method is provided, where the method is executed by a network device and includes: sending a power offset parameter to a terminal; and receiving first information determined, based on the power offset parameter, by the terminal, where the first information is used for determining channel state information (CSI).

According to a third aspect of some embodiments of the present disclosure, a terminal is provided, where the terminal includes: one or more processors; where the terminal is configured to execute the foregoing information sending method.

According to a fourth aspect of some embodiments of the present disclosure, a network device is provided, where the network device includes: one or more processors; where the network device is configured to execute the foregoing information receiving method.

According to a fifth aspect of some embodiments of the present disclosure, an information sending method is provided, where the method includes: sending, by a network device, a power offset parameter to a terminal; determining, by the terminal, first information based on the power offset parameter; and sending, by the terminal, the first information to the network device, where the first information is used for determining channel state information.

According to a sixth aspect of some embodiments of the present disclosure, a communication device is provided, where the communication device includes: one or more processors; where the processor is configured to invoke instructions, thereby causing the communication device to execute the foregoing information sending method and/or the foregoing information receiving method.

According to a seventh aspect of some embodiments of the present disclosure, a communication system is provided, where the communication system includes a terminal and a network device, where the terminal is configured to implement the foregoing information sending method, and the network device is configured to implement the foregoing information receiving method.

According to an eighth aspect of some embodiments of the present disclosure, a storage medium is provided, where the storage medium stores instructions, where the instructions, when running on a communication device, cause the communication device to execute the foregoing information sending method and/or the foregoing information receiving method.

According to these embodiments of the present disclosure, it is beneficial for network device to more accurately determine channel state information, and is beneficial for subsequent PDSCH scheduling.

### BRIEF DESCRIPTION OF THE DRAWINGS

In order to more clearly illustrate the technical solutions in these embodiments of the present disclosure, the drawings required for use in the description of these embodiments will be briefly introduced below. The drawings described below are only some embodiments of the present disclosure. For ordinary technicians in this field, other drawings can be obtained based on these drawings without creative work.
FIG. 1 is an architecture schematic diagram of a communication system according to some embodiments of the present disclosure.
FIG. 2 is an interactive schematic diagram of an information sending method according to some embodiments of the present disclosure.
FIG. 3 is a schematic flow chart of an information sending method according to some embodiments of the present disclosure.
FIG. 4 is a schematic flow chart of another information sending method according to some embodiments of the present disclosure.
FIG. 5 is a schematic flow chart of yet another information sending method according to some embodiments of the present disclosure.
FIG. 6 is a schematic flow chart of yet another information sending method according to some embodiments of the present disclosure.
FIG. 7 is a schematic flowchart of yet another information sending method according to some embodiments of the present disclosure.
FIG. 8 is a schematic flowchart of yet another information sending method according to some embodiments of the present disclosure.
FIG. 9 is a schematic flow chart of an information receiving method according to some embodiments of the present disclosure.
FIG. 10 is a schematic flow chart of another information receiving method according to some embodiments of the present disclosure.
FIG. 11 is a schematic block diagram of a terminal according to some embodiments of the present disclosure.
FIG. 12 is a schematic block diagram of a network device according to some embodiments of the present disclosure.
FIG. 13 is a structure schematic diagram of a communication device according to some embodiments of the present disclosure.
FIG. 14 is a structure schematic diagram of a chip according to some embodiments of the present disclosure.

### DETAILED DESCRIPTION

These embodiments of the present disclosure provide information sending and receiving methods and apparatus, communication device, and storage medium.

In a first aspect, some embodiments of the present disclosure provides an information sending method, where the method is executed by a terminal and includes: determining first information based on a power offset parameter; and sending the first information to a network device, where the first information is used for determining channel state information (CSI).

In the foregoing embodiments, the power offset parameter can characterize the difference value between EPRE of different downlink information sent by the network device to the terminal, for example, the difference value between EPRE of PDSCH and EPRE of CSI-RS. The terminal determines the first information based on the measurement result of CSI-RS and the power offset parameter, so that the channel state information can be more accurately characterized. Therefore, it is beneficial for the network device to more accurately determine the channel state information, and is beneficial for subsequent PDSCH scheduling.

In combination with some embodiments of the first aspect, in some embodiments, the power offset parameter is dynamically adjustable.

In combination with some embodiments of the first aspect, in some embodiments, determining the first information based on the power offset parameter includes: determining the adjusted power offset parameter based on the indication information from the network device; and determining the first information based on the adjusted power offset parameter.

In combination with some embodiments of the first aspect, in some embodiments, the indication information indicates: an adjusted power offset parameter.

In combination with some embodiments of the first aspect. In some embodiments, the indication information indicates: an offset of the adjusted power offset parameter relative to the power offset parameter before adjustment.

In combination with some embodiments of the first aspect, in some embodiments, the indication information indicates: an offset of the adjusted power offset parameter relative to a preset power offset parameter.

In combination with some embodiments of the first aspect, in some embodiments, the indication information indicates: the indication information is carried in radio resource control signaling.

In combination with some embodiments of the first aspect, in some embodiments, the indication information indicates: the indication information is carried in downlink control information.

In combination with some embodiments of the first aspect, in some embodiments, the indication information indicates: the indication information is carried in a media access control layer control element.

In combination with some embodiments of the first aspect, in some embodiments, the downlink control information includes downlink control information in a terminal-specific search space.

In combination with some embodiments of the first aspect, in some embodiments, the downlink control information includes downlink control information in a common search space.

In combination with some embodiments of the first aspect, in some embodiments, the terminal sends the first information based on a report configuration of the first information, the report configuration includes multiple sub-configurations, and the sub-configurations are associated with a power offset parameter.

In combination with some embodiments of the first aspect. In some embodiments, determining the adjusted power offset parameter based on the indication information from the network device includes: determining an activated sub-configuration among at least one sub-configuration based on the indication information from the network device; and determining that the power offset parameter associated with the activated sub-configuration as the adjusted power offset parameter.

In combination with some embodiments of the first aspect, in some embodiments, determining the first information based on the power offset parameter includes: determining multiple CSIs based on multiple power offset parameters; and determining the first information based on the multiple CSIs.

In combination with some embodiments of the first aspect, in some embodiments, the multiple power offset parameters include multiple power offset parameters pre-configured by the network device.

In combination with some embodiments of the first aspect, in some embodiments, the multiple power offset parameters include multiple power offset parameters pre-determined based on a protocol agreement.

In combination with some embodiments of the first aspect, in some embodiments, the first information includes the multiple CSIs.

In combination with some embodiments of the first aspect, in some embodiments, sending the first information to the network device includes: sending the multiple CSIs to the network device according to a first order.

In combination with some embodiments of the first aspect, in some embodiments, the first order includes an order of identifiers of the multiple CSIs.

In combination with some embodiments of the first aspect, in some embodiments, the first order includes an order of sizes of multiple power offset parameters used for determining the multiple CSIs.

In combination with some embodiments of the first aspect, in some embodiments, the first order includes an order of identifiers of multiple sub-configurations in a report configuration of the first information.

In combination with some embodiments of the first aspect, in some embodiments, the first information includes first channel state information among the multiple CSIs, and a difference value between second channel state information, other than the first channel state information, and the first channel state information.

In combination with some embodiments of the first aspect, in some embodiments, the first channel state information includes channel state information corresponding to a largest value among the multiple CSIs.

In combination with some embodiments of the first aspect, in some embodiments, the first channel state information includes channel state information determined based on a largest power offset parameter among the multiple power offset parameters.

In combination with some embodiments of the first aspect, in some embodiments, the first channel state information includes channel state information determined based on a smallest power offset parameter among the multiple power offset parameters.

In combination with some embodiments of the first aspect, in some embodiments, sending the first information to the network device includes: sending at least one difference value to the network device in a second order.

In combination with some embodiments of the first aspect, in some embodiments, the second order includes an order of identifiers of the second channel state information.

In combination with some embodiments of the first aspect, in some embodiments, the second order includes an order of sizes of the power offset parameters used for determining the second channel state information.

In combination with some embodiments of the first aspect, in some embodiments, the second order includes an order of identifiers of multiple sub-configurations in the report configuration of the first information.

In a second aspect, some embodiments of the present disclosure provides an information receiving method, where the method is executed by a network device and includes: sending a power offset parameter to a terminal; and receiving first information determined, based on the power offset parameter, by the terminal, where the first information is used for determining channel state information (CSI).

In the foregoing embodiments, the power offset parameter can characterize the difference value between EPRE of different downlink information sent by the network device to the terminal, for example, the difference value between EPRE of PDSCH and EPRE of CSI-RS. The terminal determines the first information based on the measurement result of CSI-RS and the power offset parameter, so that the channel state information can be more accurately characterized. The network device can more accurately determine the channel state information based on the first information. It is beneficial for subsequent PDSCH scheduling.

In combination with some embodiments of the second aspect, in some embodiments, the power offset parameter is dynamically adjustable.

In combination with some embodiments of the second aspect, in some embodiments, the information receiving method further includes: sending indication information to the terminal, where the indication information is used for determining the adjusted power offset parameter.

In combination with some embodiments of the second aspect, in some embodiments, receiving the first information determined, based on the power offset parameter, by the terminal includes: receiving the first information determined, based on the adjusted power offset parameter, by the terminal.

In combination with some embodiments of the second aspect, in some embodiments, the indication information indicates the adjusted power offset parameter.

In combination with some embodiments of the second aspect, in some embodiments, the indication information indicates an offset of the adjusted power offset parameter relative to the power offset parameter before adjustment.

In combination with some embodiments of the second aspect, in some embodiments, the indication information indicates an offset of the adjusted power offset parameter relative to a preset power offset parameter.

In combination with some embodiments of the second aspect, in some embodiments, the indication information is carried in radio resource control signaling.

In combination with some embodiments of the second aspect, in some embodiments, the indication information is carried in downlink control information.

In combination with some embodiments of the second aspect, in some embodiments, the indication information is carried in media access control layer control element.

In combination with some embodiments of the second aspect, in some embodiments, the downlink control information includes downlink control information in a terminal-specific search space.

In combination with some embodiments of the second aspect, in some embodiments, the downlink control information includes downlink control information in a common search space.

In combination with some embodiments of the second aspect, in some embodiments, the information receiving method further includes: sending a report configuration of the first information to the terminal, where the report configuration includes multiple sub-configurations, and the sub-configurations are associated with a power offset parameter.

In combination with some embodiments of the second aspect, in some embodiments, the information receiving method further includes: determining multiple CSIs based on the first information.

In combination with some embodiments of the second aspect, in some embodiments, the first information includes the multiple CSIs.

In combination with some embodiments of the second aspect, in some embodiments, receiving the first information determined, based on the power offset parameter, by the terminal includes: receiving, in a first order, the multiple CSIs sent by the terminal.

In combination with some embodiments of the second aspect, in some embodiments, the first order includes an order of identifiers of the multiple CSIs.

In combination with some embodiments of the second aspect, in some embodiments, the first order includes an order of sizes of multiple power offset parameters used for determining the multiple CSIs.

In combination with some embodiments of the second aspect, in some embodiments, the first order includes an order of identifiers of multiple sub-configurations in a report configuration of the first information.

In combination with some embodiments of the second aspect, in some embodiments, the first information includes first channel state information among the multiple CSIs, and a difference value between second channel state information, other than the first channel state information, and the first channel state information.

In combination with some embodiments of the second aspect, in some embodiments, the first channel state information includes channel state information corresponding to a largest value among the multiple CSIs.

In combination with some embodiments of the second aspect, in some embodiments, the first channel state information includes channel state information determined based on a largest power offset parameter among the multiple power offset parameters.

In combination with some embodiments of the second aspect, in some embodiments, the first channel state information includes channel state information determined based on a smallest power offset parameter among the multiple power offset parameters.

In combination with some embodiments of the second aspect, in some embodiments, receiving the first information determined, based on the power offset parameter, by the terminal includes: receiving, in a second order, at least one difference value sent by the terminal.

In combination with some embodiments of the second aspect, in some embodiments, the second order includes an order of identifiers of the second channel state information.

In combination with some embodiments of the second aspect, in some embodiments, the second order includes an order of sizes of the power offset parameters used for determining the second channel state information.

In combination with some embodiments of the second aspect, in some embodiments, the second order includes an order of identifiers of multiple sub-configurations in the report configuration of the first information.

In a third aspect, some embodiments of the present disclosure provides a terminal, the device including one or more processors; where the terminal is configured to execute the foregoing information sending method.

In a fourth aspect, some embodiments of the present disclosure provide a network device, the device including: one or more processors; where the network device is configured to execute the foregoing information receiving method.

In the fifth aspect, some embodiments of the present disclosure provides an information sending method, the method includes: sending, by a network device, a power offset parameter to a terminal; determining, by the terminal, first information based on the power offset parameter; and sending, by the terminal, the first information to the network device, where the first information is used for determining channel state information.

In a sixth aspect, some embodiments of the present disclosure provides a communication device, where the communication device includes: one or more processors; one or more memories for storing instructions; where the processor is used for invoking instructions, thereby causing the communication device to execute the method described in the first aspect and the second aspect, and the optional implementations of the first aspect and the second aspect.

In the seventh aspect, some embodiments of the present disclosure provides a communication system, where the communication system includes a terminal and a network device, where the terminal is configured to implement the method described in the first aspect and the second aspect, and the optional implementation of the first aspect and the second aspect, and the network device is configured to implement the method described in the first aspect and the second aspect, and the optional implementation of the first aspect and the second aspect.

In an eighth aspect, some embodiments of the present disclosure provides a storage medium, where the storage medium stores instructions where the instructions, when running on a communication device, cause the communication device to execute the method described in the first and second aspects, and the optional implementations of the first and second aspects.

In a ninth aspect, some embodiments of the present disclosure provides a program product, where the program product, when executed by a communication device, causes the communication device to execute the method described in the first and second aspects, and the optional implementations of the first and second aspects.

In a tenth aspect, some embodiments of the present disclosure provides a computer program, where the computer program, when running on a computer, causes the computer to execute the method described in the first and second aspects, and the optional implementations of the first and second aspects.

It is understandable that the foregoing terminals, network devices, communication devices, communication systems, storage medium, program products, and computer programs are all configured to execute the methods provided in these embodiments of the present disclosure. Therefore, with respect to the beneficial effects that can be achieved, the beneficial effects in the corresponding methods can be referred to, which will not be elaborated here.

These embodiments of the present disclosure provide information sending and receiving methods and terminals, network devices, communication devices and storage medium. In some embodiments, any method in the information sending method and the information receiving method can be replaced with the terms such as information processing method and communication method, any apparatus in the terminal and the network device can be replaced with the terms such as information processing device and communication device, and the terms such as information processing system and communication system can be replaced with each other.

These embodiments of the present disclosure are not exhaustive, but are merely illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined. In addition, these embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or logical conflict exists, the terms and/or descriptions between these embodiments are consistent and can be referenced to each other, and the technical features in different embodiments can be combined to form a new embodiment based on their internal logical relationships.

The terms used in these embodiments of the present disclosure are only for the purpose of describing specific embodiments and are not intended to limit the present disclosure.

In these embodiments of the present disclosure, unless otherwise specified, elements expressed in the singular form, such as "one", "an", "the", "above", "said", "foregoing", "this", and the like, may mean "one and only one", or may mean "one or more", "at least one", and the like.

In these embodiments of the present disclosure, "multiple" refers to two or more.

In some embodiments, the terms "at least one," "one or more," " a plurality of," "multiple," and the like, may be used interchangeably.

In some embodiments, "at least one of A and B", "A and/or B", "in one case A, in another case B", "in response to one case A, in response to another case B", and the like, may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, and the like, it is similar to the above.

In some embodiments, the recording such as "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, and the like, it is similar to the above.

The prefixes such as "first" and "second" in these embodiments of the present disclosure are only used for distinguishing different description objects, and do not constitute restrictions on the position, order, priority, quantity or content of the description objects. The statement of the description object refers to the description in the context of the claims or embodiments, and the use of prefixes should not constitute redundant restrictions. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatus" can be one or more. In addition, the objects modified by different prefixes may be the same or different. For example, if the description object is "apparatus", then the "first apparatus" and the "second apparatus" may be the same apparatus or different apparatus, and their types may be the same or different. For another example, if the description object is "information", then the "first information" and the "second information" may be the same information or different information, and their contents may be the same or different.

In some embodiments, "including A", "including A", "indicating A", and "carrying A" can be interpreted as directly carrying A or indirectly indicating A.

In some embodiments, terms such as "in response to ...", "in response to determining ...", "in the case of ...", "at the time of ...", "when ...", "if ...", and the like, can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatus and the like can be interpreted as physical or virtual, and their names are not limited to those recorded names in these embodiments.

The terms such as "apparatus", "equipment", "device", "circuit", "network element", "node", "function", "unit", "section", "system", "network", "chip", "chip system", "entity", and "subject" can be used interchangeably.

In some embodiments, "network" may be interpreted as apparatus included in the network (e.g., access network device, core network device, and the like).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like, can be used interchangeably.

In some embodiments, the terms "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like, may be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), and the like). In this case, the terminal can also be configured to have a structure that has all or part of the functions of the access network device. In addition, terms such as "uplink" and "downlink" can also be replaced by terms corresponding to communication between terminals (for example, "side"). For example, uplink channels, downlink channels, and the like, can be replaced by side channels, and uplinks, downlinks, and the like, can be replaced by side links.

In some embodiments, the terminal may be replaced by an access network device, a core network device, or a network device. In this case, the access network device, the core network device, or the network device may also be configured to have a structure that has all or part of the functions of the terminal.

In some embodiments, acquisition of data, information, and the like, may comply with the laws and regulations of the country where the data is obtained.

In some embodiments, data, information, and the like, may be obtained with the user's consent.

In addition, each element, each row, or each column in the table of these embodiments of the present disclosure may be implemented as an independent embodiment, and the combination of any elements, any rows, and any columns may also be implemented as an independent embodiment.

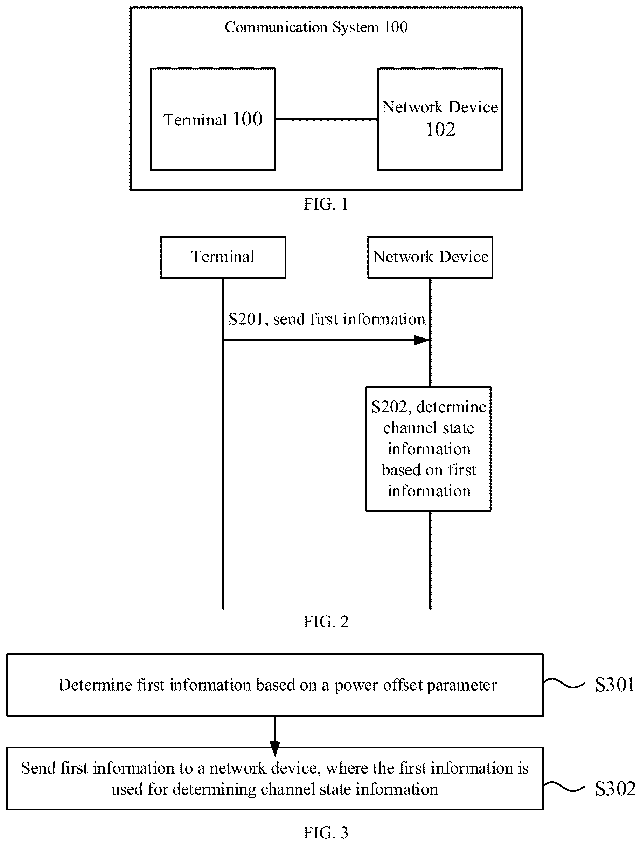

FIG. 1 is an architecture schematic diagram of a communication system according to some embodiments of the present disclosure.

As shown in FIG. 1, a communication system 100 includes a terminal 101 and a network device 102, where the network device includes at least one of: an access network device and a core network device.

In some embodiments, the terminal 101 includes at least one of, for example, a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to these.

In some embodiments, the access network device is, for example, a node or device that accesses a terminal to a wireless network. The access network device may include at least one of an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the core network device may be a device including one or more network elements, or may be multiple devices or a group of devices, each including all or part of the one or more network elements. The network element may be virtual or physical. The core network may include, for example, at least one of an Evolved Packet Core (EPC), a 5G Core Network (5GCN), and a Next Generation Core (NGC).

In some embodiments, the technical solution of the present disclosure may be applicable to the Open RAN architecture. In this case, the interfaces between or within the access network devices involved in these embodiments of the present disclosure may become internal interfaces of the Open RAN, and the processes and information interactions between these internal interfaces may be implemented through software or programs.

In some embodiments, the access network device may be composed of a central unit (CU) and a distributed unit (DU), where the CU may also be referred to as a control unit. The CU-DU structure may be used for splitting the protocol layer of the access network device, with some functions of the protocol layer being centrally controlled by the CU, and the remaining part or all of the functions of the protocol layer being distributed in the DU, and the DU being centrally controlled by the CU, but not limited to this.

It can be understood that the communication system described in these embodiments of the present disclosure is for the purpose of more clearly illustrating the technical solution of these embodiments of the present disclosure, and does not constitute a limitation on the technical solution provided in these embodiments of the present disclosure. Those ordinary skilled in the art can know that with the evolution of the system architecture and the emergence of new business scenarios, the technical solution provided in these embodiments of the present disclosure is also applicable to similar technical problems.

The following embodiments of the present disclosure may be applied to the communication system 100 shown in FIG. 1, or part of the subject, but are not limited thereto. The subject shown in FIG. 1 is an example, the communication system may include all or part of the subject in FIG. 1, or may include other subjects other than FIG. 1. The number and form of the subjects are arbitrary. The subjects may be physical or virtual. The connection relationship between the subjects is an example, and the subjects may be connected or disconnected. The connection may be in any manner, may be a direct connection or an indirect connection, and may be a wired connection or a wireless connection.

These embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems based on them, and the like. In addition, multiple systems can also be combined (for example, a combination of LTE or LTE-A and 5G, and the like) for application.

In some embodiments, the terminal may determine the CSI based on the CSI-RS, and send the determined CSI to the network device, and the network device may determine the channel state based on the received CSI.

FIG. 2 is an interactive schematic diagram of an information sending method according to some embodiments of the present disclosure. The information sending method can be applied to a communication system.

As shown in FIG. 2, the information sending method includes the followings.

In step S201, a terminal sends first information to a network device.

In some embodiments, a network device receives first information.

In some embodiments, the first information is used for determining channel state information.

In some embodiments, the terminal determines the first information based on a power offset parameter.

In some embodiments, the power offset parameter is dynamically adjustable.

In some embodiments, the terminal determines the first information based on the power offset parameter, for example, the terminal can determine the adjusted power offset parameter based on the indication information from the network device; and determine the first information based on the adjusted power offset parameter.

In some embodiments, the indication information indicates at least one of: an adjusted power offset parameter; an offset of the adjusted power offset parameter relative to the power offset parameter before adjustment; an offset of the adjusted power offset parameter relative to a preset power offset parameter.

In some embodiments, the indication information is carried in at least one of: radio resource control signaling; downlink control information; media access control layer control element.

In some embodiments, the downlink control information includes at least one of: downlink control information in a terminal-specific search space; downlink control information in a common search space.

In some embodiments, the terminal sends the first information based on a report configuration of the first information.

In some embodiments, the report configuration includes multiple sub-configurations.

In some embodiments, the sub-configurations are associated with the power offset parameter.

In some embodiments, the terminal determines the adjusted power offset parameter based on the indication information from the network device. For example, the terminal can determine the activated sub-configuration among at least one sub-configuration based on the indication information from the network device; and determine the power offset parameter associated with the activated sub-configuration as the adjusted power offset parameter.

In some embodiments, the terminal determines the first information based on the power offset parameter, including: determining multiple CSIs based on multiple power offset parameters; and determining the first information based on the multiple CSIs.

In some embodiments, the multiple power offset parameters include at least one of: multiple power offset parameters pre-configured by the network device; or multiple power offset parameters pre-determined based on a protocol agreement.

In some embodiments, the first information includes the multiple CSIs.

In some embodiments, the terminal sends the first information to the network device, including: sending the multiple CSIs to the network device in a first order.

In some embodiments, the first order includes at least one of: the order of identifiers of the multiple CSIs; the order of sizes of multiple power offset parameters used for determining the multiple CSIs; the order of identifiers of multiple sub-configurations in the report configuration of the first information.

In some embodiments, the first information includes first channel state information among the multiple CSIs, and a difference value between second channel state information, other than the first channel state information, and the first channel state information.

In some embodiments, the first channel state information includes at least one of: channel state information corresponding to a largest value among the multiple CSIs; channel state information determined based on a largest power offset parameter among the multiple power offset parameters; or channel state information determined based on a smallest power offset parameter among the multiple power offset parameters.

In some embodiments, the terminal sending the first information to the network device includes: sending at least one difference value to the network device in a second order.

In some embodiments, the second order includes at least one of: an order of identifiers of the second channel state information; an order of sizes of power offset parameters used for determining the second channel state information; and an order of identifiers of multiple sub-configurations in a report configuration of the first information.

In step S202, the network device determines channel state information based on first information sent by the terminal.

In some embodiments, before receiving the first information, the network device may first send a power offset parameter to the terminal.

In some embodiments, the power offset parameter is dynamically adjustable.

In some embodiments, the network device may send indication information to the terminal, where the indication information is used for determining the adjusted power offset parameter.

In some embodiments, the network device receives the first information determined, based on the power offset parameter, by the terminal, for example, the network device may receive the first information determined, based on the power offset parameter, by the terminal.

In some embodiments, the network device may send a report configuration of the first information to the terminal.

In some embodiments, the network device may determine multiple CSIs based on the first information.

In some embodiments, the network device receives the first information determined, based on the power offset parameter, by the terminal, for example, the network device receives, in a first order, the multiple CSIs sent by the terminal.

In some embodiments, the network device receives the first information determined, based on the power offset parameter, by the terminal, for example, the network device can receive, in a second order, at least one difference value sent by the terminal.

The communication method involved in these embodiments of the present disclosure may include at least one of step S201 to step S202. For example, step S201 may be implemented as an independent embodiment, step S202 may be implemented as an independent embodiment, and step S201+step S202 may be implemented as independent embodiments, but are not limited thereto.

In some embodiments, steps S201 and S202 may be performed in an interchangeable order or simultaneously.

In some embodiments, step S201 is optional, and one or more of these steps may be omitted or replaced in different embodiments.

In some embodiments, step S202 is optional, and one or more of these steps may be omitted or replaced in different embodiments.

With respect to the related implementations of the terminal and the network device in FIG. 2, these embodiments below can be referred to, and will not be elaborated here.

These embodiments of the present disclosure provide an information sending method. FIG. 3 is a schematic flow chart of an information sending method according to some embodiments of the present disclosure. The information sending method shown in these embodiments can be executed by a terminal.

As shown in FIG. 3, the information sending method may include the following steps.

In step S301, first information is determined based on a power offset parameter.

In step S302, first information is sent to a network device, where the first information is used for determining channel state information.

It should be noted that these embodiments shown in FIG. 3 may be implemented independently or in combination with at least one other embodiment in the present disclosure. The specific implementation may be selected as needed and is not limited in the present disclosure.

In some embodiments, the terminal may determine the first information based on a power offset parameter, where the power offset parameter may include but is not limited to a value determined based on a power control offset in Radio Resource Control (RRC) signaling.

It should be noted that the power offset parameter is not limited to being determined based on RRC signaling. The terminal can also determine the power offset parameter in other ways, for example, based on the protocol agreement, or based on Media Access Control Control Element (MAC CE), or based on Downlink Control Information (DCI) to determine the power offset parameter.

In some embodiments, the power offset parameter can characterize the difference in between EPRE of different downlink information sent by the network device to the terminal, for example, the difference value between EPRE of PDSCH and EPRE of CSI-RS. The terminal determines the first information based on the measurement result of CSI-RS and the power offset parameter, so that the channel state information can be more accurately characterized. Therefore, it is beneficial for the network device to more accurately determine the channel state information, and is beneficial for subsequent PDSCH scheduling.

In some embodiments, the power offset parameter can be dynamically adjustable. For example, when referring to that the power offset parameter can be dynamically adjustable, it means that the network device can adjust the power offset parameter based on the change of the service, so that the adjusted power offset parameter can accurately represent the difference value between the EPRE of the PDSCH and the EPRE of the CSI-RS when communicating based on the changed service. For example, the power offset parameter can be adjusted through RRC signaling, or DCI, or MAC CE.

In some embodiments, the network device can dynamically adjust the sending power of PDSCH and/or CSI-RS based on some requirements. For example, in a network energy saving (NES) scenario, in order to reduce the power consumption of the network device, the network device can dynamically adjust the sending power of PDSCH and/or CSI-RS based on the transmission environment.

In this case, the first difference value determined by the terminal based on the original power offset parameter (that is, the power offset parameter before adjustment) is different from the actual second difference value between the EPRE of the CSI-RS and the EPRE of the PDSCH, and the second difference value can be used for accurately determining the channel state information. If the terminal still determines the first information based on the first difference value, the first information is difficult to use to accurately determine the channel state information, thereby causing the network device to fail to accurately determine the channel state information, reducing the PDSCH scheduling performance.

In some embodiments, the network device dynamically adjusts the sending power of PDSCH and/or CSI-RS, including at least one of: dynamically adjusting the frequency domain resources (e.g., bandwidth) used for sending PDSCH and/or CSI-RS, and dynamically adjusting the power spectral density (PSD) of PDSCH and/or CSI-RS.

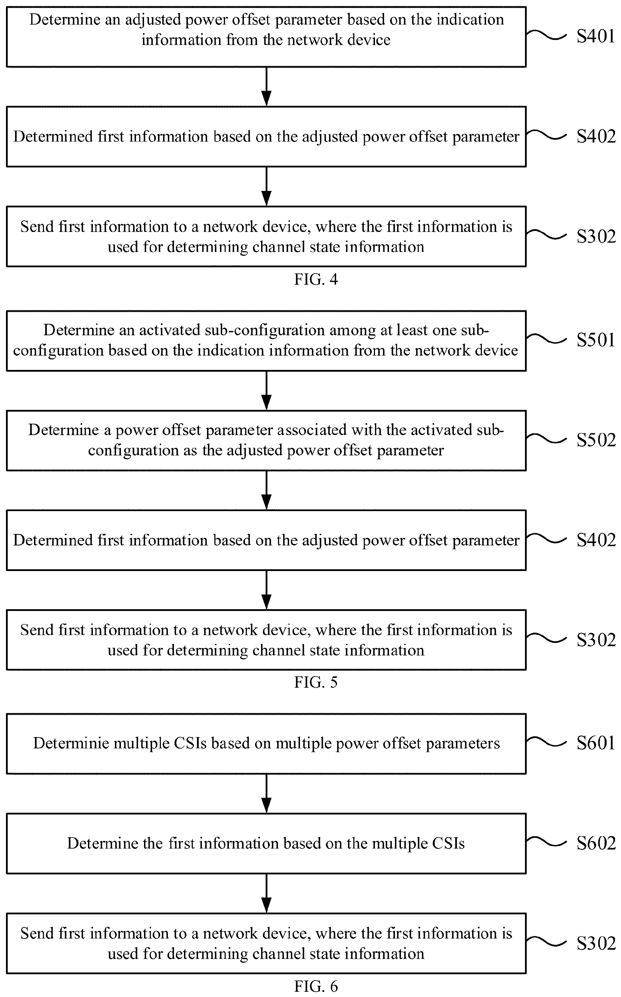

FIG. 4 is a schematic flow chart of another information sending method according to some embodiments of the present disclosure. The information sending method shown in these embodiments can be executed by a terminal. As shown in FIG. 4, determining the first information based on the power offset parameter includes the followings.

In step S401, the adjusted power offset parameter is determined based on the indication information from the network device.

In step S402, first information is determined based on the adjusted power offset parameter.

It should be noted that these embodiments shown in FIG. 4 can be implemented independently or in combination with at least one other embodiment in the present disclosure. The specific implementation may be selected as needed and is not limited in the present disclosure.

In some embodiments, since the network device dynamically adjusts the sending power of PDSCH and/or CSI-RS, the first information, determined, based on the first difference value determined by the original power offset parameter, by the terminal, is difficult to accurately characterize the channel state information. In this case, the network device can send indication information to the terminal, where the indication information is used for determining the adjusted power offset parameter. The terminal can determine the adjusted power offset parameter based on the indication information, where the adjusted power offset parameter can accurately characterize the difference value between the EPRE of the PDSCH and the EPRE of the CSI-RS, so that the first information determined based on the adjusted power offset parameter is conducive to accurately determining the channel state information.

Accordingly, it is beneficial for the network device to appropriately perform subsequent actions, such as PDSCH scheduling, based on accurate channel state information. For example, when the channel state information is inaccurate and the network device schedules PDSCH based on the inaccurate channel state information, the selected Modulation and Coding Scheme (MCS) has poor applicability to the channel, thereby making it difficult for the terminal to correctly parse the PDSCH. According to these embodiments of the present disclosure, when the network device can schedule PDSCH according to accurate channel state information, the selected MCS has better applicability to the channel. It is beneficial to ensure that the terminal can smoothly parse the PDSCH, so as to ensure good communication quality.

In some embodiments, the indication information indicates at least one of:
the adjusted power offset parameter;
the index of the adjusted power offset parameter;
the offset of the adjusted power offset parameter relative to the power offset parameter before adjustment; or
the offset of the adjusted power offset parameter relative to a preset power offset parameter (also referred to as a reference power offset parameter).

In some embodiments, the indication information may indicate the adjusted power offset parameter, and the terminal may directly determine the adjusted power offset parameter based on the indication information.

For example, a part of the indication information may be carried in RRC signaling to indicate a power offset parameter set (for example, it may be stored in the form of a list), and the terminal may store the power offset parameter set; another part of the indication information may be carried in downlink control information (DCI) or a media access control layer control element (MAC CE) to indicate a power offset parameter in the power offset parameter set. The terminal may determine a power offset parameter in the power offset parameter set as the adjusted power offset parameter based on the DCI or the MAC CE.

For example, the RRC signaling sent by the network device to the terminal includes a CSI-RS resource, such as a non-zero power CSI-RS resource (NZP CSI-RS resource). The information element in the CSI-RS resource may include a power offset parameter list, and the power offset parameter list includes multiple power offset parameters. The network device may send a DCI to the terminal, and the DCI indicates a power offset parameter in the power offset parameter list, or to indicate an index of a power offset parameter in the power offset parameter list. After receiving the RRC signaling, the terminal may store the power offset parameter list, and then after receiving the DCI, it may determine the power offset parameter indicated by the DCI in the power offset parameter list as the adjusted power offset parameter.

In some embodiments, the indication information may indicate the offset of the adjusted power offset parameter relative to the power offset parameter before adjustment, and the terminal may add (or subtract) the offset indicated by the indication information from the power offset parameter before adjustment to obtain the adjusted power offset parameter.

For example, the power offset parameter before adjustment is PO#1, and the offset is ΔPO, then the adjusted power offset parameter PO#2 may be PO#1+ΔPO.

For example, a part of the indication information may be carried in the RRC signaling to indicate the offset set (for example, it may be stored in the form of a list), and the terminal may store the offset set; another part of the indication information may be carried in the DCI or MAC CE to indicate an offset or an index of an offset in the offset set. The terminal may determine an offset in the offset set as an offset of the adjusted power offset parameter relative to the power offset parameter before adjustment based on the DCI or MAC CE.

In some embodiments, the indication information may indicate an offset of the adjusted power offset parameter relative to a preset power offset parameter or an index of the offset, and the terminal may determine the adjusted power offset parameter based on the offset of the power offset parameter before adjustment relative to the preset power offset parameter and the offset of the adjusted power offset parameter relative to the preset power offset parameter. The preset power offset parameter and the offset of the power offset parameter before adjustment relative to the preset power offset parameter are known to the terminal.

For example, the power offset parameter before adjustment is PO#1, the offset relative to the preset power offset parameter is ΔPO#1, and the offset of the adjusted power offset parameter PO#2 relative to the preset power offset parameter is ΔPO#2, then the adjusted power offset parameter PO#2 can be PO#1+ΔPO#2-ΔPO#1.

For example, a part of the indication information may be carried in the RRC signaling to indicate the offset set (for example, it may be stored in the form of a list), and the terminal may store the offset set; another part of the indication information may be carried in the DCI or MAC CE to indicate an offset in the offset set. The terminal may determine an offset in the offset set as an offset of the adjusted power offset parameter relative to the preset power offset parameter based on the DCI or MAC CE.

In some embodiments, the indication information is carried in at least one of:
Radio Resource Control (RRC) signaling;
Downlink control information (DCI); or
Medium Access Control Layer Control Element (MAC CE).

For example, the network device may reconfigure the power offset parameter via RRC signaling.

For example, the network device can carry indication information through DCI to dynamically indicate the adjusted power offset parameter to the terminal. Compared with carrying indication information through RRC signaling, this is beneficial for the terminal to promptly determine the adjusted power offset parameter, and then promptly determine the first information based on the adjusted power offset parameter and determine the channel state information based on the first information, so that the network device can promptly obtain accurate channel state information, thereby accurately determining the channel state.

For example, the network device can carry indication information through MAC CE to dynamically indicate the adjusted power offset parameter to the terminal. Compared with carrying indication information through RRC signaling, this is beneficial for the terminal to promptly determine the adjusted power offset parameter, and then promptly determine the first information based on the adjusted power offset parameter and determine the channel state information based on the first information, so that the network device can promptly obtain accurate channel state information, thereby accurately determining the channel state.

In some embodiments, the downlink control information includes at least one of:
downlink control information in the UE-specific Search Space (USS); or
downlink control information in the Common Search Space (CSS).

For example, the network device may carry indication information in the DCI of the USS and send it to a terminal corresponding to the USS, and dynamically indicate the adjusted power offset parameter to the terminal. For example, the network device may carry indication information in the DCI of the CSS and send it to multiple terminals corresponding to the CSS, and dynamically indicate the adjusted power offset parameter to the multiple terminals.

It should be noted that the type of DCI used for carrying the indication information is not limited to the foregoing USS DCI and CSS DCI, but may include any type of DCI. For example, it may include group common downlink control information (Group-common DCI), cell-specific downlink control information (Cell-specific DCI), terminal-specific downlink control information (UE-specific DCI), and the like, which will not be elaborated here.

In some embodiments, the terminal sends the first information based on a report configuration of the first information, the report configuration includes multiple sub-configurations, one sub-configuration can be associated with one or more CSI-RS resources, and one CSI-RS resource can correspond to one or more power parameters.

In some embodiments, a sub-configuration may be associated with a power offset parameter corresponding to a CSI-RS resource, and the association may also be associated with an index in a power offset parameter list based on the power offset parameter. For example, CSI-RS resource#1 corresponds to three power offset parameters, namely PO#1 to PO#3. When sub-configuration#1 is associated with CSI-RS resource#1, sub-configuration#1 may be further associated with PO#1, sub-configuration#1 may be further associated with PO#2, and sub-configuration#1 may be further associated with PO#3.

In some embodiments, a sub-configuration may be associated with a power offset parameter corresponding to each of multiple CSI-RS resources, for example, a sub-configuration may be associated with a power offset parameter, corresponding to each of multiple CSI-RS resources, having the same index. For example, CSI-RS resource#1 corresponds to 3 power offset parameters, namely PO#1 to PO#3, in which the index of PO#1 is 1, the index of PO#2 is 2, and the index of PO#3 is 3; CSI-RS resource#2 corresponds to 3 power offset parameters, namely PO#4 to PO#6, in which the index of PO#4 is 1, the index of PO#5 is 2, and the index of PO#6 is 3. In the case where sub-configuration#1 is associated with CSI-RS resource#1 and CSI-RS resource#2, sub-configuration#1 may be further associated with PO#1 and PO#4.

In some embodiments, a sub-configuration may be associated with multiple power offset parameters corresponding to a CSI-RS resource. For example, CSI-RS resource #1 corresponds to three power offset parameters, namely PO #1 to PO #3. When sub-configuration #1 is associated with CSI-RS resource #1, sub-configuration #1 may be further associated with PO #1 and PO #2.

In some embodiments, a sub-configuration may be associated with multiple power offset parameters corresponding to one or more CSI-RS resources. For example, a sub-configuration may be associated with multiple power offset parameters, corresponding to each of multiple CSI-RS resources, having the same index. For example, CSI-RS resource#1 corresponds to 3 power offset parameters, namely PO#1 to PO#3, in which the index of PO#1 is 1, the index of PO#2 is 2, and the index of PO#3 is 3; CSI-RS resource#2 corresponds to 3 power offset parameters, namely PO#4 to PO#6, in which the index of PO#4 is 1, the index of PO#5 is 2, and the index of PO#6 is 3. In the case where sub-configuration#1 is associated with CSI-RS resource#1 and CSI-RS resource#2, sub-configuration#1 may be further associated with PO#1, PO#2, PO#4, and PO#5.

For example, the first information may be channel state information. The terminal may determine the report resource based on the report configuration of the first information, and send the first information to the network device in the report resource. The report configuration may include multiple sub-configurations, the sub-configurations are associated with the power offset parameter, and may also be associated with a CSI-RS resource for receiving CSI-RS. The terminal may determine multiple report resources based on multiple sub-configurations, and then after receiving the CSI-RS on the CSI-RS resource associated with the report resource, the channel state information may be determined based on the received CSI-RS and the power offset parameter associated with the sub-configuration, and then the determined channel state information may be sent in the report resource corresponding to the sub-configuration (e.g., configuration).

For example, the report configuration includes three sub-configurations, namely sub-configuration#1, sub-configuration#2, and sub-configuration#3, among which the power offset parameter associated with sub-configuration#1 is PO#1, the power offset parameter associated with sub-configuration#2 is PO#2, and the power offset parameter associated with sub-configuration#3 is PO#3.

The terminal determines that the CSI-RS resource associated with sub-configuration#1 is CSI-RS resource#1. When it is determined that sub-configuration#1 is activated, after receiving the CSI-RS based on the CSI-RS resource#1 configuration, the terminal can determine the channel state information based on the measurement result of the CSI-RS and PO#1, and send the determined channel state information in the report resource configured by sub-configuration#1.

The terminal determines that the CSI-RS resource associated with sub-configuration#2 is CSI-RS resource#2. When it is determined that sub-configuration#2 is activated, after receiving the CSI-RS based on the CSI-RS resource#2 configuration, the terminal can determine the channel state information based on the measurement result of the CSI-RS and PO#2, and send the determined channel state information in the report resource configured by sub-configuration#2.

The terminal determines that the CSI-RS resources associated with sub-configuration#3 are CSI-RS resource#1 and CSI-RS resource#3. When it is determined that sub-configuration#3 is activated, after receiving the CSI-RS based on the CSI-RS resource#1 and CSI-RS resource#3 configurations, the terminal can determine the channel state information based on the measurement results of the CSI-RS and PO#1 and PO#3, and send the determined channel state information in the report resources configured by sub-configuration#3.

For example, the report configuration includes at least sub-configuration sub-configuration#1. Sub-configuration#1 is associated with CSI-RS resource#1 and CSI-RS resource#2. CSI-RS resource#1 corresponds to three power offset parameters, namely PO#1 to PO#3; CSI-RS resource#2 corresponds to three power offset parameters, namely PO#4 to PO#6. When sub-configuration#1 is associated with CSI-RS resource#1 and CSI-RS resource#2, sub-configuration#1 may be further associated with PO#1 and PO#4. When the terminal determines that sub-configuration#1 is activated, after receiving CSI-RS based on CSI-RS resource#1 configuration and CSI-RS resource#2 configuration, the terminal may determine channel state information based on PO#1 and PO#4 and the measurement result of CSI-RS, and send the determined channel state information in the report resource configured by sub-configuration#1.

FIG. 5 is a schematic flow chart of yet another information sending method according to some embodiments of the present disclosure. The information sending method shown in these embodiments can be executed by a terminal. As shown in FIG. 5, determining the adjusted power offset parameter based on the indication information from the network device includes the followings.

In step S501, an activated sub-configuration is determined in at least one sub-configuration based on indication information of a network device.

In step S502, the power offset parameter associated with the activated sub-configuration is determined as the adjusted power offset parameter.

It should be noted that these embodiments shown in FIG. 5 can be implemented independently or in combination with at least one other embodiment in the present disclosure. The specific implementation may be selected as needed and is not limited in the present disclosure.

In some embodiments, the network device can activate a sub-configuration in at least one sub-configuration included in the reported configuration through indication information (e.g., DCI). The terminal can determine the activated sub-configuration based on the indication information, and then determine the power offset parameter associated with the activated sub-configuration, and use the determined power offset parameter as the adjusted power offset parameter.

For example, still taking the foregoing three sub-configurations as an example, the terminal receives CSI-RS on CSI-RS resource #1 associated with sub-configuration #1, can determine the first information based on PO #1 and the measurement result of CSI-RS, and send the first information (such as channel state information) on the report resource configured by sub-configuration #1, where PO #1 is the power offset parameter before adjustment.

The network device can indicate the activation of sub-configuration#2 through indication information. The terminal determines the activation of sub-configuration#2 based on the indication information, and can determine the power offset parameter PO#2 associated with sub-configuration#2. After receiving CSI-RS on CSI-RS resource#2 associated with sub-configuration#2, the terminal can determine the first information based on PO#2 and the measurement result of CSI-RS, where PO#2 is the adjusted power offset parameter, and send the first information (such as channel state information) on the report resource configured by sub-configuration#2.

In some embodiments, after receiving the indication information for activating the sub-configuration, the terminal does not expect to determine the first information based on the CSI-RS before adjusting the sending power.

For example, after receiving the indication information for activating the sub-configuration, the terminal can determine that the power offset parameter associated with the sub-configuration is the adjusted power offset parameter, but the terminal is to determine the first information based on the adjusted power offset parameter and the measurement result of the CSI-RS after adjusting the sending power.

When the network device dynamically adjusts the sending power of PDSCH and/or CSI-RS, the network device sends indication information for activating the sub-configuration to the terminal. When the terminal receives the indication information for activating the sub-configuration, the network device has adjusted the sending power of PDSCH and/or CSI-RS, that is, the power offset parameter, but the CSI-RS after adjusting the power offset parameter may have not yet been sent to the terminal. If the terminal still determines and reports the first information based on the power offset parameter before the adjustment and the measurement result of the CSI-RS after adjusting the power offset parameter, the network side cannot determine whether the power offset parameter corresponding to the received first information is before or after the update, and it is difficult to ensure that the first information accurately represents the channel state information.

Therefore, the terminal may not expect to determine the first information based on the CSI-RS before adjusting the power offset parameter. After receiving the indication information for activating the sub-configuration, the terminal can wait to receive the CSI-RS after adjusting the power offset parameter, and then determine the first information based on the measurement result of the CSI-RS after adjusting the power offset parameter, thereby being conducive to ensuring that the first information accurately represents the channel state information.

In some embodiments, after receiving the indication information for activating the sub-configuration, the terminal does not expect to send first information determined based on the measurement result of the CSI-RS before adjusting the power offset parameter to the network device.

For example, after receiving the indication information for activating the sub-configuration, although the terminal can determine that the power offset parameter associated with the sub-configuration is the adjusted power offset parameter, the terminal is to send the first information determined based on the adjusted power offset parameter and the measurement result of the CSI-RS after adjusting power offset parameter to the network device.

When the network device dynamically adjusts the sending power of PDSCH and/or CSI-RS, the network device sends indication information for activating the sub-configuration to the terminal. When the terminal receives the indication information for activating the sub-configuration, the network device has adjusted the sending power of PDSCH and/or CSI-RS, that is, the power offset parameter, but the CSI-RS after adjusting the power offset parameter may have not yet been sent to the terminal. If the terminal still sends the first information determined and reported based on the power offset parameter before the adjustment and the measurement result of the CSI-RS before adjusting the power offset parameter to the network device, the network side cannot determine whether the power offset parameter corresponding to the received first information is before or after the update, and it is difficult to ensure that the first information accurately represents the channel state information.

Therefore, the terminal may not expect to send the first information determined based on the measurement result of the CSI-RS before adjusting the power offset parameter to the network device after receiving the indication information for activating the sub-configuration. After receiving the indication information for activating the sub-configuration, the terminal may wait to receive the CSI-RS after adjusting the power offset parameter, and then send the first information determined based on the measurement result of the CSI-RS after adjusting the power offset parameter to the network device, thereby being conducive to ensuring that the first information accurately represents the channel state information.

In some embodiments, after the network device sends indication information for activating the sub-configuration to the terminal, if it is determined that the terminal does not expect to determine the first information based on the CSI-RS before adjusting the power offset parameter, the network side can determine that the received channel state information is determined by the terminal based on the adjusted power offset parameter and the measurement results of the CSI-RS after adjusting the power offset parameter, thereby being beneficial for the network side to schedule subsequent data based on the updated channel state information.

In some embodiments, after receiving the CSI-RS on the CSI-RS resource corresponding to the sub-configuration activated by the indication information for activating the sub-configuration, the terminal does not expect to send the first information determined based on the power offset parameter before adjustment to the network device. For example, after receiving the indication information for activating the sub-configuration, the terminal can perform channel measurement on the CSI-RS resource associated with the activated sub-configuration, such as receiving the CSI-RS. Then, the first information is determined based on the adjusted power offset parameter and the CSI-RS received on the CSI-RS resource configured by the sub-configuration activated by the indication information, and then the foregoing first information is sent to the network.

The network device may send indication information for activating the sub-configuration to the terminal when dynamically adjusting the sending power of the PDSCH and/or CSI-RS, that is, the power offset parameter. When the terminal receives the indication information for activating the sub-configuration, the network device has adjusted the sending power of the PDSCH and/or CSI-RS, that is, the power offset parameter, but the CSI-RS after adjusting the power offset parameter may have not yet been sent to the terminal.

Therefore, the terminal may not send channel state information to the network device for the time being, but after receiving the CSI-RS on the CSI-RS resource corresponding to the sub-configuration activated by the indication information, calculate and report the first information based on the adjusted power offset parameter and the measurement result of the CSI-RS. Since the CSI-RS sent by the network device on the CSI-RS resource configured by the sub-configuration activated by the indication information is the CSI-RS after adjusting the power offset parameter, the first information determined by the terminal based on the adjusted power offset parameter and the measurement result of the CSI-RS received on the CSI-RS resource configured by the sub-configuration activated by the indication information can accurately represent the channel state information.

In some embodiments, after the CSI-RS resource corresponding to the sub-configuration activated by the indication information, the terminal does not expect to send first information determined based on the measurement result of the CSI-RS before adjusting the power offset parameter to the network device.

For example, after receiving the indication information for activating the sub-configuration, the terminal can perform CSI measurement on the CSI-RS resource associated with the activated sub-configuration, such as receiving CSI-RS. Then, the first information is determined based on the adjusted power offset parameter and the CSI-RS received by the CSI-RS resource configured in the sub-configuration activated by the indication information.

The network device may send indication information for activating the sub-configuration to the terminal when dynamically adjusting the sending power of the PDSCH and/or CSI-RS, that is, the power offset parameter. When the terminal receives the indication information for activating the sub-configuration, the network device has adjusted the sending power of the PDSCH and/or CSI-RS, that is, the power offset parameter, but the CSI-RS after adjusting the power offset parameter may have not yet been sent to the terminal.

Therefore, after receiving the CSI-RS on the CSI-RS resource corresponding to the sub-configuration activated by the indication information, the terminal can send the first information determined based on the adjusted power offset parameter and the measurement result of the CSI-RS to the network device. Since the CSI-RS sent by the network device on the CSI-RS resource configured by the sub-configuration activated by the indication information is the CSI-RS after adjusting the power offset parameter. The terminal can obtain the channel state information determined by the measurement result of the CSI-RS received by the CSI-RS resource configured by the sub-configuration activated by the indication information and the adjusted power offset parameter based on the first information sent to the network device. On the other hand, the terminal can continue to report the CSI before the power offset parameter is adjusted after receiving the indication information and before receiving the CSI-RS on the CSI-RS resource corresponding to the sub-configuration. After the base station stores the corresponding CSI information, it can be used for subsequent scheduling of the same power offset parameter.

FIG. 6 is a schematic flow chart of yet another information sending method according to some embodiments of the present disclosure. The information sending method shown in these embodiments can be executed by a terminal. As shown in FIG. 6, determining the first information based on the power offset parameter includes the followings.

In step S601, multiple CSIs are determined based on multiple power offset parameters.

In step S602, first information is determined based on multiple CSIs.

It should be noted that these embodiments shown in FIG. 6 can be implemented independently or in combination with at least one other embodiment in the present disclosure. The specific implementation may be selected as needed and is not limited in the present disclosure.

In some embodiments, the terminal may determine multiple power offset parameters. For example, the multiple power offset parameters include at least one of: multiple power offset parameters pre-configured by the network device; multiple power offset parameters pre-determined based on a protocol agreement.

The terminal may determine the channel state information based on each power offset parameter in the multiple power offset parameters respectively, thereby obtaining multiple CSIs, and further determine the first information based on the multiple CSIs.

For example, the multiple power offset parameters are n power offset parameters, and the terminal can determine the i-th channel state information based on the i-th power offset parameter, where 1≤i≤n, so that n channel state information can be determined based on the n power offset parameters.

For example, the first information includes multiple CSIs. When referring to that the terminal determines the first information based on the multiple CSIs, it means that the multiple CSIs are used as the first information.

The terminal can send multiple CSIs to the network device, and the network device can store the association between the channel state information and the power offset parameter. The network device dynamically adjusts the sending power of PDSCH and/or CSI-RS, resulting in adjustment of the power offset parameter. The network device can determine the channel state information corresponding to the adjusted power offset parameter, and then determine the channel state based on the channel state information.

For example, the first information includes the first channel state information among the multiple CSIs, and the difference value between the first channel state information and the second channel state information other than the first channel state information. When referring to that the terminal determines the first information based on the multiple CSIs, it means that the first channel state information is determined among the multiple CSIs, and then the difference value between each second channel state information and the first channel state information is determined, and the first channel state information and at least one difference value are used as the first information.

The terminal can send the first channel state information and at least one difference value to the network device, the network device can restore the at least one difference value to at least one channel state information, and the network device can store the association between the channel state information and the power offset parameter. The network device dynamically adjusts the sending power of PDSCH and/or CSI-RS, resulting in adjustment of the power offset parameter. The network device can determine the channel state information corresponding to the adjusted power offset parameter, and then determine the channel state based on the channel state information.

The following provides exemplary explanations, through several embodiments, the case where the first information includes multiple CSIs and the case where the first information includes the first channel state information and at least one difference value.

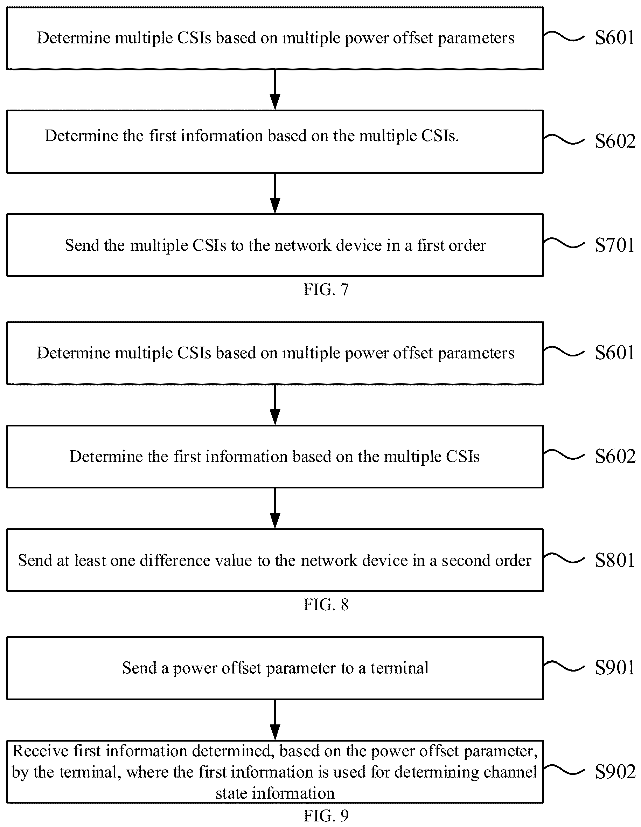

FIG. 7 is a schematic flowchart of yet another information sending method according to some embodiments of the present disclosure. The information sending method shown in these embodiments can be executed by a terminal. As shown in FIG. 7, sending first information to a network device includes the followings.

In step S701, multiple CSIs are sent to a network device in a first order.

It should be noted that these embodiments shown in FIG.7 can be implemented independently or in combination with at least one other embodiment in the present disclosure. The specific implementation may be selected as needed and is not limited in the present disclosure.

In some embodiments, the first information includes multiple CSIs. In this case, when the terminal sends the first information to the network device, the multiple CSIs may be sent to the network device in a first order.

In some embodiments, the first order may be configured by the network device, or the first order may be agreed upon by a protocol, or the first order may be determined by the terminal and indicated to the network device. Regardless of which the foregoing manners the first order is determined by, it is known to the network device. Therefore, the network device may determine which channel state information the received multiple CSIs are, based on the first order of the received multiple CSIs.

In addition, the network device also stores the association between the channel state information and the power offset parameter, so the network device can determine the power offset parameter corresponding to each channel state information. Then, when the network device dynamically adjusts the sending power of PDSCH and/or CSI-RS, resulting in the adjustment of the power offset parameter, the network device can determine the channel state information corresponding to the adjusted power offset parameter, and then determine the channel state based on the channel state information.

In some embodiments, the terminal sends multiple CSIs to the network device in a first order, and can send multiple CSIs in multiple sending processes, for example, one channel state information is sent in each sending process, and the network device can determine the order of the multiple CSIs based on the order of the sending processes; or, multiple CSIs can be carried in one uplink information in one sending process and sent to the network device. In this case, the multiple CSIs can be set in multiple positions (for example, multiple bits) in the uplink information in the first order, and the network device can determine the order of the multiple CSIs based on the position of the channel state information in the uplink information.

In some embodiments, the first order includes at least one of:
the order of identifiers of the multiple CSIs, such as the identifiers of the multiple CSIs from small to large, such as the identifiers of the multiple CSIs from large to small;
the order of sizes of multiple power offset parameters used for determining the multiple CSIs, such as multiple power offset parameters from small to large, such as multiple power offset parameters from large to small;
the order of identifiers of multiple sub-configurations in the report configuration of the first information.

For example, the first order includes the order of identifiers of multiple CSIs from small to large, and the multiple CSIs are 3 pieces of channel state information. The terminal determines 3 pieces of channel state information according to 3 power offset parameters, and then sends the 3 pieces of channel state information to the network device based on the identifiers of the channel state information from small to large. For example, the 3 pieces of channel state information are CSI#1, CSI#2 and CSI#4, then CSI#1, CSI#2 and CSI#4 can be sent to the network device in the order of CSI#1, CSI#2 and CSI#4.

The first order is known to the network device. Therefore, the network device can determine, in the first order, that the first channel state information sent by the terminal is CSI#1, the second channel state information sent by the terminal is CSI#2, and the third channel state information sent by the terminal is CSI#4.

In addition, the network device also stores the association between the channel state information and the power offset parameter, for example, the association are: CSI#1 is associated with the power offset parameter PO#1, CSI#2 is associated with the power offset parameter PO#2, ..., CSI#n is associated with the power offset parameter PO#n. Then, when the network device dynamically adjusts the sending power of PDSCH and/or CSI-RS, resulting in the adjustment of the power offset parameter, the network device can determine the adjusted power offset parameter. For example, the adjusted power offset parameter is PO#2, then based on the foregoing association, the channel state information can be further determined to be CSI#2, so that the channel state can be determined according to CSI#2.

For example, the first order includes the order, from small to large, of the identifiers of multiple sub-configurations in the report configuration of the first information, and the multiple sub-configurations are 3 sub-configurations, namely sub-configuration#1 identified as 1, sub-configuration#2 identified as 2, and sub-configuration#3 identified as 3.

Among multiple CSI-RS resources, CSI-RS resource#1 corresponds to 3 power offset parameters, namely PO#1 to PO#3, CSI-RS resource#2 corresponds to 3 power offset parameters, namely PO#4 to PO#6, CSI-RS resource#3 corresponds to 2 power offset parameters, namely PO#7 to PO#8, and CSI-RS resource#4 corresponds to 4 power offset parameters, namely PO#9 to PO#12.

When sub-configuration#1 is associated with CSI-RS resource#1 and CSI-RS resource#2, sub-configuration#1 can be further associated with PO#1 and PO#4. When the terminal determines that sub-configuration#1 is activated, after receiving CSI-RS based on CSI-RS resource#1 configuration and CSI-RS resource#2 configuration, channel state information CSI#1 can be determined based on PO#1 and PO#4 and the measurement result of CSI-RS.

When sub-configuration#2 is associated with CSI-RS resource#3, sub-configuration #2 can be further associated with PO #5. When the terminal determines that sub-configuration #2 is activated, after receiving CSI-RS based on CSI-RS resource #3 configuration, channel state information CSI #2 can be determined based on PO #5 and the measurement result of CSI-RS.

When sub-configuration#3 is associated with CSI-RS resource#4, sub-configuration#3 can be further associated with PO#7. When the terminal determines that sub-configuration#3 is activated, after receiving CSI-RS based on CSI-RS resource#4 configuration, channel state information CSI#3 can be determined based on PO#7 and the measurement result of CSI-RS.

The 3 sub-configuration identifiers are in the order of sub-configuration#1, sub-configuration#2, and sub-configuration#3 from small to large, and the corresponding channel state information is in the order of CSI#1, CSI#2, and CSI#3. Under the condition that the 3 sub-configurations are activated, the terminal sends multiple CSIs in the first order, and can first send CSI#1 in the report resources configured in sub-configuration#1, then send CSI#2 in the report resources configured in sub-configuration#2, and finally send CSI#3 in the report resources configured in sub-configuration#3.

In some embodiments, multiple CSIs may be determined based on dynamic signaling (e.g., at least one of DCI and MAC CE). For example, the terminal may first determine multiple sub-configurations based on the configuration information from the network device (e.g., RRC signaling), and determine multiple activated sub-configurations based on the indication information from the network device (e.g., at least one of DCI and MAC CE). For any of the multiple sub-configurations, the terminal may receive CSI-RS on the CSI-RS resource associated with the sub-configuration, determine the measurement result of the CSI-RS, and determine the channel state information based on the adjusted power offset parameter and the measurement result. Then, for multiple sub-configurations, multiple CSIs may be determined, and the determined multiple CSIs may be sent to the network device.

In some embodiments, in addition to determining which channel state information the received multiple CSIs are, based on the first order, the network device may achieve this effect in other ways, which is not limited in the present disclosure.

For example, the network device can configure resources for the terminal to send channel state information. The association exists between the resources and the channel state information. The terminal can send the channel state information on the resources associated with the channel state information. When the network device receives the channel state information, the network device can determine which channel state information the received channel state information is, based on the resources where the channel state information is located.

For example, the network device configures resources for the terminal to send channel state information, and the resources are composed of multiple sub-resources, where the i-th sub-resource is used for sending CSI#i. When the terminal sends CSI#1, CSI#2 and CSI#4 to the network device, the first sub-resource can be used for sending CSI#1, the second sub-resource can be used for sending CSI#2, and the fourth sub-resource can be used for sending CSI#4. The network device can determine that the channel state information received in the first sub-resource is CSI#1, the channel state information received in the second sub-resource is CSI#2, and the channel state information received in the fourth sub-resource is CSI#4.

FIG. 8 is a schematic flowchart of yet another information sending method according to some embodiments of the present disclosure. The information sending method shown in these embodiments can be executed by a terminal. As shown in FIG. 8, sending first information to a network device includes the followings.

In step S801, at least one difference value is sent to a network device in a second order.

It should be noted that these embodiments shown in FIG. 8 can be implemented independently or in combination with at least one other embodiment in the present disclosure. The specific implementation may be selected as needed and is not limited in the present disclosure.

In some embodiments, the first information includes first channel state information among multiple CSIs, and a difference value between the first channel state information and the second channel state information other than the first channel state information.

In some embodiments, the second order may be configured by the network device, or the second order may be agreed upon by the protocol, or the second order may be determined by the terminal and indicated to the network device. Regardless of which the foregoing manners the second order is determined by, it is known to the network device. Therefore, the network device can determine which channel state information the at least one difference value received corresponds to, based on the second order of receiving multiple CSIs, and then restore the difference value to the corresponding channel state information.

Since the difference value of the channel state information is generally smaller than the channel state information, sending the difference value to the terminal is beneficial for reducing the amount of data required for communication so as to save communication resources.

In addition, the network device also stores the association between the channel state information and the power offset parameter, so the network device can determine the power offset parameter corresponding to each channel state information. Then, when the network device dynamically adjusts the sending power of the PDSCH and/or CSI-RS, resulting in the adjustment of the power offset parameter, the network device can determine the channel state information corresponding to the adjusted power offset parameter, and then determine the channel state based on the channel state information.

In some embodiments, the terminal sends the first channel state signal and at least one difference value to the network device in the second order. The first channel state signal and at least one difference value may be sent in multiple sending processes, for example, one difference value is sent in each sending process, and the network device can determine the order of the first channel state signal and the at least one difference value based on the order of the sending processes; or, the first channel state signal and at least one difference value may be carried in an uplink information in one sending process and sent to the network device. In this case, the first channel state signal and the at least one difference value may be set in multiple positions (for example, multiple bits) in the uplink information in the first order, and the network device can determine the order of the first channel state signal and the at least one difference value based on the position of the channel state information in the uplink information.

In some embodiments, the first channel state information includes at least one of:
channel state information corresponding to a largest value among the multiple CSIs;
channel state information determined based on a largest power offset parameter among the multiple power offset parameters;
channel state information determined based on a smallest power offset parameter among the multiple power offset parameters.

In some embodiments, the second order includes at least one of:
the order of identifiers of the second channel state information, such as an order of identifiers of the second channel state information from small to large, such as an order of identifiers of the second channel state information from large to small;
the order of sizes of the power offset parameters used for determining the second channel state information, such as an order of sizes of power offset parameters for determining the second channel state information from small to large, such as an order of sizes of power offset parameters for determining the second channel state information from large to small;
the order of identifiers of multiple sub-configurations in the report configuration of the first information.

In some embodiments, the channel state information may include at least one of: Rank Indication (RI), Precoding Type Indicator (PTI), Precoding Matrix Indicator (PMI) and Channel Quality Indicator (CQI).

Taking the PMI in the channel state information as an example, the first channel state information includes the channel state information corresponding to a largest value among the multiple CSIs, and the PMI may be a value used for determining a Precoding Matrix (PM).

For example, each channel state information includes a PMI, so the multiple CSIs may include multiple PMIs, the first channel state information may be the PMI corresponding to a largest value among the multiple PMIs, and the second channel state information may be the PMI other than PMI#0 among the multiple PMIs.

For example, the multiple PMIs are 3 PMIs, namely PMI#1, PMI#2 and PMI#4, where the PMI corresponding to the largest value is PMI#2, then the first channel state information is PMI#2, and the second channel state information includes PMI#1 and PMI#4.

The terminal may determine a difference value D#12 between PMI#1 and PMI#2, and a difference value D#42 between PMI#4 and PMI#2, where the first information includes PMI#2, D#12 and D#42. The terminal may send PMI#2, D#12 and D#42 to the network device in the second order.

For example, when the first channel state information includes the channel state information corresponding to the largest value among the multiple CSIs, the terminal may further send the power offset parameter, corresponding to the channel state information corresponding to the largest value, or the index of the power offset parameter to the network device. The terminal may determine the power offset parameter, corresponding to the channel state information corresponding to the largest value, or the index of the power offset parameter according to a preset association.

For example, the preset association may include channel state information corresponding to power offset parameter values from small to large (or from large to small). Taking small to large as an example, the i-th power offset parameter corresponds to the i-th smallest power offset parameter. For example, taking 4 power offset parameters as an example, from small to large, they are PO#1, PO#2, PO#3 and PO#4, then the first power offset parameter is PO#1, the second power offset parameter is PO#2, the third power offset parameter is PO#3, and the fourth power offset parameter is PO#4. According to the preset association, the network device can determine that the received 4 power offset parameters are PO#1, PO#2, PO#3 and PO#4, respectively.

For example, the preset association may be the power offset parameters corresponding to the channel state information from small to large (or from large to small), and taking small to large as an example, the i-th power offset parameter corresponds to the power offset parameter corresponding to the i-th smallest channel state information. For example, taking the channel state information corresponding to 4 power offset parameters as an example, from small to large, they are CSI#3, CSI#4, CSI#1, and CSI#2, and the power offset parameters corresponding to these 4 channel state information are PO#3, PO#4, PO#1, and PO#2, respectively. Then the first power offset parameter is PO#3, the second power offset parameter is PO#4, the third power offset parameter is PO#1, and the fourth power offset parameter is PO#2. Based on the preset association, the network device can determine that the received 4 power offset parameters are PO#3, PO#4, PO#1, and PO#2, respectively.

For example, the first channel state information may be located at a preset position in the second order, such as at the starting position, or at the ending position. Taking the first channel state information being located at the starting position as an example. The second order includes the order of the identifiers of the second channel state information from small to large, the identifier of the second channel state information corresponding to D#12 is 2, and the identifier of the second channel state information corresponding to D#42 is 4. Then in the second order, D#12 is ranked before D#42, and the terminal may send PMI#2, D#12, and D#42 to the network device in the order of PMI#2, D#12, and D#42.

The second order is known to the network device, so the network device can determine, in the second order, that the first PMI sent by the terminal is PMI#2, the second difference value sent by the terminal is D#12, and the third difference value sent by the terminal is D#42. Then the network device can restore the difference value to the corresponding channel state information, for example, the difference value can be added to the first channel state information to obtain the channel state information corresponding to the difference value, for example, for D#12, the PMI#2 and D#12 can be added to obtain PMI#1, and for D#42, the PMI#2 and D#42 can be added to obtain PMI#4.

In addition, the network device also stores an association between the channel state information and the power offset parameter, for example, the association is: PMI#1 is associated with the power offset parameter PO#1, PMI#2 is associated with the power offset parameter PO#2, ..., PMI#n is associated with the power offset parameter PO#n. Then, when the network device dynamically adjusts the sending power of PDSCH and/or CSI-RS, resulting in the adjustment of the power offset parameter, the network device can determine the adjusted power offset parameter. For example, the adjusted power offset parameter is PO#2, then based on the foregoing association, the channel state information can be further determined to be PMI#2, so that the channel state can be determined based on PMI#2 (other information in the channel state information where PMI#2 is located can also be considered).

In some embodiments, when sending the first channel state information to the network device, the terminal may also send a power offset parameter used for determining the first channel state information to the network device, so that the network device can accurately determine the power offset parameter associated with the first channel state information.

In some embodiments, in addition to determining which channel state information the at least one received difference value corresponds to, in the second order, the network device may also achieve this effect in other ways, which is not limited in the present disclosure.

For example, the network device can configure multiple resources for the terminal to send channel state information. The association exists between the resources and the channel state information. The terminal can send the first channel state information and at least one difference value in the resources associated with the channel state information. When the network device receives the channel state information, the network device can determine which channel state information the received difference corresponds to, based on the resource where the channel state information is located.

For example, the network device configures resources for the terminal to send channel state information, and the resources are composed of multiple sub-resources, where the i-th sub-resource is used for sending CSI#i. When the terminal sends PMI#1, PMI#2 and PMI#4 to the network device, the first sub-resource can be used for sending PMI#2, the second sub-resource can be used for sending D#12, and the fourth sub-resource can be used for sending D#42. The network device can determine that the channel state information received in the first sub-resource is PMI#2, the channel state information received in the second sub-resource is D#12, and the channel state information received in the fourth sub-resource is D#42.

In some embodiments, the names of information, and the like, are not limited to the names recorded in these embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", "chip" and so on can be used interchangeably.

In some embodiments, the terms "codebook", "codeword", "precoding matrix" and the like can be interchangeable. For example, a codebook can be a collection of one or more codewords/precoding matrices.

In some embodiments, terms such as "up", "uplink", "physical uplink" can be interchangeable, and terms such as "down", "downlink", "physical downlink" can be interchangeable, and terms such as "side", "sidelink", "side communication", "sidelink communication", "direct connection", "direct link", "direct communication", "direct link communication" can be interchangeable.

In some embodiments, the terms "radio", "wireless", "radio access network (RAN)", "access network (AN)", "RAN-based" and the like may be used interchangeably.

In some embodiments, terms such as "send", "transmit", "report", "send", "transmit", "bidirectional transmission", "send and/or receive" can be used interchangeably.

In some embodiments, "not expected to receive..." can be interpreted as not receiving on time domain resources and/or frequency domain resources, or as not performing subsequent processing on the data after receiving the data; "not expected to send..." can be interpreted as not sending, or as sending but not expecting the recipient to respond to the sent content.

These embodiments of the present disclosure provide an information receiving method. FIG. 9 is a schematic flow chart of an information receiving method according to some embodiments of the present disclosure. The information receiving method shown in these embodiments can be executed by a network device, and the access network device can communicate with a terminal.

As shown in FIG. 9, the information receiving method may include the following steps.

In step S901, a power offset parameter is sent to a terminal;

In step S902, the receiving terminal determines first information based on the power offset parameter, where the first information is used for determining channel state information.

It should be noted that these embodiments shown in FIG.. 9 can be implemented independently or in combination with at least one other embodiment in the present disclosure. The specific implementation may be selected as needed and is not limited in the present disclosure.

In some embodiments, the network device may send a power offset parameter to the terminal, and the terminal may determine the first information based on the power offset parameter. The network device sending the power offset parameter to the terminal may include sending a power control offset (powercontrolOffset) in RRC signaling to the terminal, and the terminal may determine the power offset parameter based on the power control offset in the RRC signaling.

It should be noted that the power offset parameter is not limited to being indicated through RRC signaling. The network device can also indicate the power offset parameter to the terminal in other ways, for example, the power offset parameter can be indicated through MAC CE or through DCI.

In some embodiments, the power offset parameter can characterize the difference value between EPREs of different downlink information sent by the network device to the terminal. For example, the difference value between EPRE of PDSCH and EPRE of CSI-RS. The terminal determines the first information based on the power offset parameter and the measurement result of CSI-RS, which can more accurately characterize the channel state information, so that the network device can more accurately determine the channel state information based on the first information, thereby being beneficial to the subsequent scheduling of PDSCH.

In some embodiments, the power offset parameter is dynamically adjustable. For example, when referring to that the power offset parameter of the network device is dynamically adjustable, it means that the network device can adjust the power offset parameter based on the change of the service, so that the adjusted power offset parameter can accurately represent the difference value between the EPRE of the PDSCH and the EPRE of the CSI-RS when communicating based on the changed service. For example, the power offset parameter can be adjusted through RRC signaling, or DCI, or MAC CE.

In some embodiments, the network device can dynamically adjust the sending power of PDSCH and/or CSI-RS based on some requirements. For example, in a network energy saving (NES) scenario, in order to reduce the power consumption of the network device, the network device can dynamically adjust the sending power of PDSCH and/or CSI-RS based on the transmission environment.

In this case, the first difference value determined by the terminal based on the original power offset parameter (that is, the power offset parameter before adjustment) is different from the actual second difference value between the EPRE of the CSI-RS and the EPRE of the PDSCH, and the second difference value can be used for accurately determining the channel state information. If the terminal still determines the first information based on the first difference value, the first information is difficult to use to accurately determine the channel state information, thereby causing the network device to fail to accurately determine the channel state information, thereby reducing the PDSCH scheduling performance.

In some embodiments, the network device dynamically adjusts the sending power of PDSCH and/or CSI-RS, including at least one of: dynamically adjusting the frequency domain resources (e.g., bandwidth) used for sending PDSCH and/or CSI-RS, and dynamically adjusting the power spectral density (PSD) of PDSCH and/or CSI-RS.

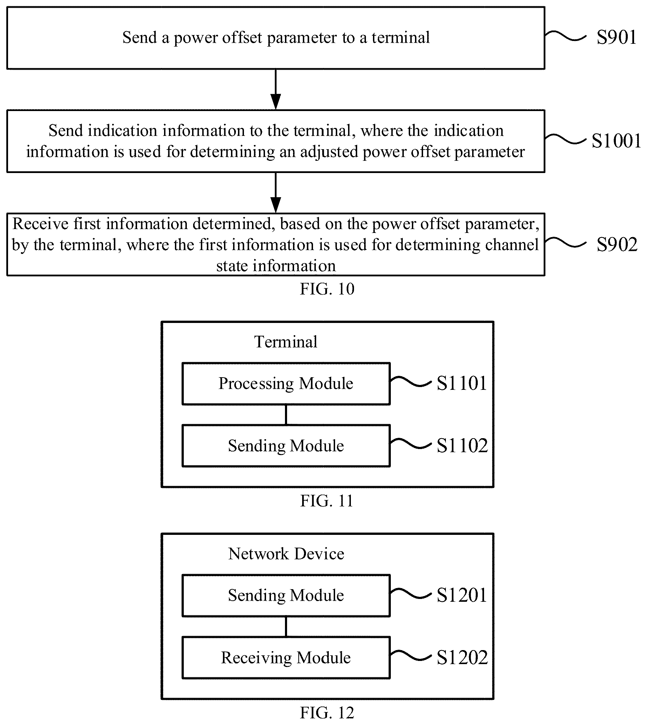

FIG. 10 is a schematic flow chart of another information receiving method according to some embodiments of the present disclosure. The information sending method shown in these embodiments can be executed by a network device. As shown in FIG. 10, the information receiving method also includes the followings.

In step S1001, indication information is sent to a terminal, where the indication information is used for determining an adjusted power offset parameter.

It should be noted that these embodiments shown in FIG. 10 can be implemented independently or in combination with at least one other embodiment in the present disclosure. The specific implementation may be selected as needed and is not limited in the present disclosure.

In some embodiments, since the network device dynamically adjusts the sending power of PDSCH and/or CSI-RS, the first information, determined, based on the first difference value determined by the original power offset parameter, by the terminal, is difficult to accurately characterize the channel state information. In this case, the network device can send indication information to the terminal, where the indication message is used for determining the adjusted power offset parameter. The terminal can determine the adjusted power offset parameter based on the indication information, where the adjusted power offset parameter can accurately characterize the difference value between the EPRE of the PDSCH and the EPRE of the CSI-RS, so that the first information determined based on the adjusted power offset parameter is conducive to accurately determining the channel state information.

In some embodiments, receiving the first information determined, based on the power offset parameter, by terminal, including: receiving the first information determined, based on the adjusted power offset parameter, by terminal.

Since the first information determined by the terminal based on the power offset parameter is more accurate, the network device can receive the first information determined by the terminal based on the adjusted power offset parameter, thereby facilitating the network device to appropriately perform subsequent actions based on the accurate channel state information, such as PDSCH scheduling. For example, when the channel state information is inaccurate and the network device schedules PDSCH based on the inaccurate channel state information, the selected MCS has poor applicability to the channel, thereby making it difficult for the terminal to correctly parse the PDSCH. According to some embodiments of the present disclosure, when the network device can schedule PDSCH according to accurate channel state information, the selected MCS has better applicability to the channel. It is beneficial to ensure that the terminal can smoothly parse the PDSCH, so as to ensure good communication quality.

In some embodiments, the indication information indicates at least one of:
the adjusted power offset parameter;
the index of the adjusted power offset parameter;
the offset of the adjusted power offset parameter relative to the power offset parameter before adjustment; or
the offset of the adjusted power offset parameter relative to a preset power offset parameter.

In some embodiments, the indication information may indicate the adjusted power offset parameter, and the terminal may directly determine the adjusted power offset parameter based on the indication information.

For example, a part of the indication information may be carried in RRC signaling to indicate a power offset parameter set (for example, it may be stored in the form of a list), and the terminal may store the power offset parameter set; another part of the indication information may be carried in downlink control information (DCI) or a media access control layer control element (MAC CE) to indicate an index of a power offset parameter or offset in the power offset parameter set. The terminal may determine a power offset parameter in the power offset parameter set as the adjusted power offset parameter based on the DCI or MAC CE.

For example, the RRC signaling sent by the network device to the terminal includes CSI-RS resources, such as non-zero power CSI-RS resources (NZP CSI-RS resource). The information element in the CSI-RS resource may include a power offset parameter list, and the power offset parameter list includes multiple power offset parameters or multiple offset indexes. The network device may send DCI to the terminal, and the DCI indicates a power offset parameter in the power offset parameter list, or to indicate an index of a power offset parameter in the power offset parameter list. After receiving the RRC signaling, the terminal may store the power offset parameter list, and then after receiving the DCI, it may determine the power offset parameter indicated by the DCI in the power offset parameter list as the adjusted power offset parameter.

In some embodiments, the indication information may indicate the offset of the adjusted power offset parameter relative to the power offset parameter before adjustment, and the terminal may add (or subtract) the offset indicated by the indication information from the power offset parameter before adjustment to obtain the adjusted power offset parameter.

For example, the power offset parameter before adjustment is PO#1, and the offset is ΔPO, then the adjusted power offset parameter PO#2 may be PO#1+ΔPO.

For example, a part of the indication information may be carried in the RRC signaling to indicate the offset set (for example, it may be stored in the form of a list), and the terminal may store the offset set; another part of the indication information may be carried in the DCI or MAC CE to indicate an offset in the offset set. The terminal may determine an offset in the offset set as an offset of the adjusted power offset parameter relative to the power offset parameter before adjustment based on the DCI or MAC CE.

In some embodiments, the indication information may indicate an offset of the adjusted power offset parameter relative to a preset power offset parameter, and the terminal may determine the adjusted power offset parameter based on the offset of the power offset parameter before adjustment relative to the preset power offset parameter and the offset of the adjusted power offset parameter relative to the preset power offset parameter. The preset power offset parameter and the offset of the power offset parameter before adjustment relative to the preset power offset parameter are known to the terminal.

For example, the power offset parameter before adjustment is PO#1, the offset relative to the preset power offset parameter is ΔPO#1, and the offset of the adjusted power offset parameter PO#2 relative to the preset power offset parameter is ΔPO#2, then the adjusted power offset parameter PO#2 can be PO#1+ΔPO#2-ΔPO#1.

For example, a part of the indication information may be carried in the RRC signaling to indicate the offset set (for example, it may be stored in the form of a list), and the terminal may store the offset set; another part of the indication information may be carried in the DCI or MAC CE to indicate an offset in the offset set. The terminal may determine an offset in the offset set as an offset of the adjusted power offset parameter relative to the preset power offset parameter based on the DCI or MAC CE.

In some embodiments, the indication information is carried in at least one of:
Radio Resource Control (RRC) signaling;
Downlink control information (DCI); or
Medium Access Control Layer Control Element (MAC CE)..

For example, the network device may reconfigure the power offset parameter via RRC signaling.

For example, the network device can carry indication information through DCI to dynamically indicate the adjusted power offset parameter to the terminal. Compared with carrying indication information through RRC signaling, this is beneficial for the terminal to promptly determine the adjusted power offset parameter, and then promptly determine the first information based on the adjusted power offset parameter and determine the channel state information based on the first information, so that the network device can promptly obtain accurate channel state information, thereby accurately determining the channel state.

For example, the network device can carry indication information through MAC CE to dynamically indicate the adjusted power offset parameter to the terminal. Compared with carrying indication information through RRC signaling, this is beneficial for the terminal to promptly determine the adjusted power offset parameter, and then promptly determine the first information based on the adjusted power offset parameter and determine the channel state information based on the first information, so that the network device can promptly obtain accurate channel state information, thereby accurately determining the channel state.

In some embodiments, the downlink control information includes at least one of:
downlink control information in the UE-specific Search Space (USS); or
downlink control information in the Common Search Space (CSS).

For example, the network device may carry indication information in the DCI of the USS and send it to a terminal corresponding to the USS, and dynamically indicate the adjusted power offset parameter to the terminal. For example, the network device may carry indication information in the DCI of the CSS and send it to multiple terminals corresponding to the CSS, and dynamically indicate the adjusted power offset parameter to the multiple terminals.

It should be noted that the type of DCI used for carrying the indication information is not limited to the foregoing USS DCI and CSS DCI, but may include any type of DCI. For example, it may include group common downlink control information (Group-common DCI), cell-specific downlink control information (Cell-specific DCI), terminal-specific downlink control information (UE-specific DCI), and the like, which will not be elaborated here.

In some embodiments, the information receiving method further includes: sending a report configuration of the first information to the terminal, where the report configuration includes multiple sub-configurations, and the sub-configurations are associated with the power offset parameter.

After receiving the report configuration of the first information, the terminal can send the first information based on the report configuration of the first information. The report configuration includes multiple sub-configurations. One sub-configuration can be associated with one or more CSI-RS resources. One CSI-RS resource can correspond to one or more power parameters.

In some embodiments, a sub-configuration may be associated with a power offset parameter corresponding to a CSI-RS resource, and the association may also be associated with an index in a power offset parameter list based on the power offset parameter. For example, CSI-RS resource#1 corresponds to three power offset parameters, namely PO#1 to PO#3. When sub-configuration#1 is associated with CSI-RS resource#1, sub-configuration#1 may be further associated with PO#1, sub-configuration#1 may be further associated with PO#2, and sub-configuration#1 may be further associated with PO#3.

In some embodiments, a sub-configuration may be associated with a power offset parameter corresponding to each of multiple CSI-RS resources, for example, a sub-configuration may be associated with a power offset parameter, corresponding to each of multiple CSI-RS resources, having the same index. For example, CSI-RS resource#1 corresponds to 3 power offset parameters, PO#1 to PO#3, in which the index of PO#1 is 1, the index of PO#2 is 2, and the index of PO#3 is 3; CSI-RS resource#2 corresponds to 3 power offset parameters, PO#4 to PO#6, in which the index of PO#4 is 1, the index of PO#5 is 2, and the index of PO#6 is 3. In the case where sub-configuration#1 is associated with CSI-RS resource#1 and CSI-RS resource#2, sub-configuration#1 may be further associated with PO#1 and PO#4.

In some embodiments, a sub-configuration may be associated with multiple power offset parameters corresponding to a CSI-RS resource. For example, CSI-RS resource #1 corresponds to three power offset parameters, namely PO #1 to PO #3. When sub-configuration #1 is associated with CSI-RS resource #1, sub-configuration #1 may be further associated with PO #1 and PO #2.

In some embodiments, a sub-configuration may be associated with multiple power offset parameters corresponding to one or more CSI-RS resources. For example, a sub-configuration may be associated with multiple power offset parameters, corresponding to each of multiple CSI-RS resources, having the same index. For example, CSI-RS resource#1 corresponds to 3 power offset parameters, namely PO#1 to PO#3, in which the index of PO#1 is 1, the index of PO#2 is 2, and the index of PO#3 is 3; CSI-RS resource#2 corresponds to 3 power offset parameters, namely PO#4 to PO#6, in which the index of PO#4 is 1, the index of PO#5 is 2, and the index of PO#6 is 3. In the case where sub-configuration#1 is associated with CSI-RS resource#1 and CSI-RS resource#2, sub-configuration#1 may be further associated with PO#1, PO#2, PO#4, and PO#5.

For example, the first information may be channel state information. The terminal may determine the report resource based on the report configuration of the first information, and send the first information to the network device in the report resource. The report configuration may include multiple sub-configurations, the sub-configurations are associated with the power offset parameter, and may also be associated with a CSI-RS resource for receiving CSI-RS. The terminal may determine multiple report resources based on multiple sub-configurations, and then after receiving the CSI-RS on the CSI-RS resource associated with the report resource, the channel state information may be determined based on the received CSI-RS and the power offset parameter associated with the sub-configuration, and then the determined channel state information may be sent in the report resource corresponding to the sub-configuration (e.g., configuration).

For example, the report configuration includes three sub-configurations, namely sub-configuration#1, sub-configuration#2, and sub-configuration#3, among which the power offset parameter associated with sub-configuration#1 is PO#1, the power offset parameter associated with sub-configuration#2 is PO#2, and the power offset parameter associated with sub-configuration#3 is PO#3.

The terminal determines that the CSI-RS resource associated with sub-configuration#1 is CSI-RS resource#1. When it is determined that sub-configuration#1 is activated, after receiving the CSI-RS based on the CSI-RS resource#1 configuration, the terminal can determine the channel state information based on the measurement result of the CSI-RS and PO#1, and send the determined channel state information in the report resource configured by sub-configuration#1.

The terminal determines that the CSI-RS resource associated with sub-configuration#2 is CSI-RS resource#2. When it is determined that sub-configuration#2 is activated, after receiving the CSI-RS based on the CSI-RS resource#2 configuration, the terminal can determine the channel state information based on the measurement result of the CSI-RS and PO#2, and send the determined channel state information in the report resource configured by sub-configuration#2.

The terminal determines that the CSI-RS resources associated with sub-configuration#3 are CSI-RS resource#1 and CSI-RS resource#3. When it is determined that sub-configuration#3 is activated, after receiving the CSI-RS based on the CSI-RS resource#1 and CSI-RS resource#3 configurations, the terminal can determine the channel state information based on the measurement results of the CSI-RS and PO#1 and PO#3, and send the determined channel state information in the report resources configured by sub-configuration#3.

For example, the report configuration includes at least sub-configuration sub-configuration#1. Sub-configuration#1 is associated with CSI-RS resource#1 and CSI-RS resource#2, and CSI-RS resource#1 corresponds to 3 power offset parameters, namely PO#1 to PO#3; CSI-RS resource#2 corresponds to 3 power offset parameters, namely PO#4 to PO#6. When sub-configuration#1 is associated with CSI-RS resource#1 and CSI-RS resource#2, sub-configuration#1 can be further associated with PO#1 and PO#4. When the terminal determines that sub-configuration#1 is activated, after receiving CSI-RS based on CSI-RS resource#1 configuration and CSI-RS resource#2 configuration, the terminal can determine the channel state information based on PO#1 and PO#4 and the measurement result of CSI-RS, and send the determined channel state information in the report resource configured by sub-configuration#1.

In some embodiments, the network device can activate a sub-configuration in at least one sub-configuration included in the reported configuration through indication information (e.g., DCI). The terminal can determine the activated sub-configuration based on the indication information, and then determine the power offset parameter associated with the activated sub-configuration, and use the determined power offset parameter as the adjusted power offset parameter.

For example, still taking the foregoing three sub-configurations as an example, the terminal receives CSI-RS on CSI-RS resource #1 associated with sub-configuration #1, can determine the first information based on PO #1 and the measurement result of CSI-RS, and send the first information (such as channel state information) on the report resource configured by sub-configuration #1, where PO #1 is the power offset parameter before adjustment.

The network device can indicate the activation of sub-configuration#2 through indication information. The terminal determines the activation of sub-configuration#2 based on the indication information, and can determine the power offset parameter PO#2 associated with sub-configuration#2. After receiving CSI-RS on CSI-RS resource#2 associated with sub-configuration#2, the terminal can determine the first information based on PO#2 and the measurement result of CSI-RS, where PO#2 is the adjusted power offset parameter, and send the first information (such as channel state information) on the report resource configured by sub-configuration#2.

In some embodiments, after sending indication information for activating a sub-configuration to the terminal, the network device may determine that the received channel state information is determined by the terminal based on an adjusted power offset parameter and a measurement result of the CSI-RS after adjusting the sending power.

In some embodiments, after receiving the indication information for activating the sub-configuration, the terminal does not expect to determine the first information based on the CSI-RS before adjusting the sending power.

In some embodiments, after receiving the CSI-RS on the CSI-RS resource corresponding to the sub-configuration activated by the indication information for activating the sub-configuration, the terminal does not expect to send the first information determined based on the power offset parameter before adjustment to the network device. For example, after receiving the indication information for activating the sub-configuration, the terminal can perform CSI measurement on the CSI-RS resource associated with the activated sub-configuration, such as receiving CSI-RS. Then, the first information is determined based on the adjusted power offset parameter and the CSI-RS received by the CSI-RS resource configured in the sub-configuration activated by the indication information.

The network device may send indication information for activating the sub-configuration to the terminal when dynamically adjusting the sending power of the PDSCH and/or CSI-RS, that is, the power offset parameter. When the terminal receives the indication information for activating the sub-configuration, the network device has adjusted the sending power of the PDSCH and/or CSI-RS, that is, the power offset parameter, but the CSI-RS after adjusting the power offset parameter may have not yet been sent to the terminal.

Therefore, after receiving the CSI-RS on the CSI-RS resource corresponding to the sub-configuration activated by the indication information, the terminal can send the first information determined based on the adjusted power offset parameter and the measurement result of the CSI-RS to the network device. Since the CSI-RS sent by the network device on the CSI-RS resource configured by the sub-configuration activated by the indication information is the CSI-RS after adjusting the power offset parameter. The terminal can determine the channel state information of the measurement result of the CSI-RS received by the CSI-RS resource configured by the sub-configuration activated by the indication information and the adjusted power offset parameter based on the first information sent to the network device. On the other hand, the terminal can continue to report the CSI before the power offset parameter is adjusted after receiving the indication information and before receiving the CSI-RS on the CSI-RS resource corresponding to the sub-configuration. After the base station stores the corresponding CSI information, it can be used for subsequent scheduling of the same power offset parameter.

In some embodiments, the information receiving method further includes: determining multiple CSIs based on the first information.

For example, the terminal may determine multiple power offset parameters. For example, the multiple power offset parameters include at least one of: multiple power offset parameters pre-configured by a network device; or multiple power offset parameters pre-determined based on a protocol agreement.

The terminal may determine the channel state information according to each power offset parameter in the multiple power offset parameters respectively, thereby obtaining multiple CSIs, and further determine the first information based on the multiple CSIs.

For example, the multiple power offset parameters are n power offset parameters, and the terminal can determine the i-th channel state information based on the i-th power offset parameter, where 1≤i≤n, so that n channel state information can be determined based on the n power offset parameters.

For example, the first information includes multiple CSIs. When referring to that the terminal determines the first information based on the multiple CSIs, it means that the multiple CSIs are used as the first information. When referring to that the network device determines the multiple CSIs based on the first information, it means that the multiple CSIs included in the first information are obtained.

The network device may store an association between channel state information and power offset parameters. The network device dynamically adjusts the sending power of PDSCH and/or CSI-RS, resulting in adjustment of the power offset parameters. The network device may determine the channel state information corresponding to the adjusted power offset parameters, and then determine the channel state based on the channel state information.

For example, the first information includes the first channel state information among the multiple CSIs, and the difference value between the first channel state information and the second channel state information other than the first channel state information. When referring to that the network device determines the multiple CSIs based on the first information, it means that the terminal determines the first information based on the multiple CSIs, and then the difference value between each second channel state information and the first channel state information is determined, and the multiple second channel state information are restored based on the first channel state information and at least one difference value, and the determined multiple CSIs includes the first channel state information and the multiple second channel state information.

The network device can restore at least one difference value to at least one channel state information, and the network device can store the association between the channel state information and the power offset parameter. The network device dynamically adjusts the sending power of PDSCH and/or CSI-RS, resulting in adjustment of the power offset parameter. The network device can determine the channel state information corresponding to the adjusted power offset parameter, and then determine the channel state based on the channel state information.

In some embodiments, the first information includes multiple CSIs.

In some embodiments, receiving first information determined, based on the power offset parameter, by the terminal includes: receiving, in a first order, multiple CSIs sent by the terminal.

In some embodiments, the first information includes multiple CSIs. In this case, the terminal sends the first information to the network device, and can send the multiple CSIs to the network device in the first order. Correspondingly, the network device can receive, in the first order, the multiple CSIs sent by the terminal.

In some embodiments, the first order may be configured by the network device, or the first order may be agreed upon by a protocol, or the first order may be determined by the terminal and indicated to the network device. Regardless of which the foregoing manners the first order is determined by, it is known to the network device. Therefore, the network device may determine which channel state information the received multiple CSIs are, based on the first order of the received multiple CSIs.

In addition, the network device also stores the association between the channel state information and the power offset parameter, so the network device can determine the power offset parameter corresponding to each channel state information. Then, when the network device dynamically adjusts the sending power of PDSCH and/or CSI-RS, resulting in the adjustment of the power offset parameter, the network device can determine the channel state information corresponding to the adjusted power offset parameter, and then determine the channel state based on the channel state information.

In some embodiments, the terminal sends multiple CSIs to the network device in a first order, and can send multiple CSIs in multiple sending processes, for example, one channel state information is sent in each sending process, and the network device can determine the order of the multiple CSIs based on the order of the sending processes; or, multiple CSIs can be carried in one uplink information in one sending process and sent to the network device. In this case, the multiple CSIs can be set in multiple positions (for example, multiple bits) in the uplink information in the first order, and the network device can determine the order of the multiple CSIs based on the position of the channel state information in the uplink information.

In some embodiments, the first order includes at least one of:
the order of identifiers of the multiple CSIs, such as the identifiers of the multiple CSIs from small to large, such as the identifiers of the multiple CSIs from large to small;
the order of sizes of multiple power offset parameters used for determining the multiple CSIs, such as multiple power offset parameters from small to large, such as multiple power offset parameters from large to small;
the order of identifiers of multiple sub-configurations in the report configuration of the first information, such as the identifiers of the multiple sub-configurations are from small to large, such as the identifiers of the multiple sub-configurations are from large to small.

For example, the first order includes the order of identifiers of multiple CSIs from small to large, and the multiple CSIs are 3 pieces of channel state information. The terminal determines 3 pieces of channel state information according to 3 power offset parameters, and then sends the 3 pieces of channel state information to the network device based on the identifiers of the channel state information from small to large. For example, the 3 pieces of channel state information are CSI#1, CSI#2 and CSI#4, then CSI#1, CSI#2 and CSI#4 can be sent to the network device in the order of CSI#1, CSI#2 and CSI#4.

The first order is known to the network device. Therefore, the network device can determine, in the first order, that the first channel state information sent by the terminal is CSI#1, the second channel state information sent by the terminal is CSI#2, and the third channel state information sent by the terminal is CSI#4.

In addition, the network device also stores an association between the channel state information and the power offset parameter, for example, the association are: CSI#1 is associated with the power offset parameter PO#1, CSI#2 is associated with the power offset parameter PO#2, ..., CSI#n is associated with the power offset parameter PO#n. Then, when the network device dynamically adjusts the sending power of PDSCH and/or CSI-RS, resulting in the adjustment of the power offset parameter, the network device can determine the adjusted power offset parameter. For example, the adjusted power offset parameter is PO#2, then based on the foregoing association, the channel state information can be further determined to be CSI#2, so that the channel state can be determined according to CSI#2.

For example, the first order includes the order, from small to large, of the identifiers of multiple sub-configurations in the report configuration of the first information, and the multiple sub-configurations are 3 sub-configurations, namely sub-configuration#1 identified as 1, sub-configuration#2 identified as 2, and sub-configuration#3 identified as 3.

Among multiple CSI-RS resources, CSI-RS resource#1 corresponds to 3 power offset parameters, namely PO#1 to PO#3, CSI-RS resource#2 corresponds to 3 power offset parameters, namely PO#4 to PO#6, CSI-RS resource#3 corresponds to 2 power offset parameters, namely PO#7 to PO#8, and CSI-RS resource#4 corresponds to 4 power offset parameters, namely PO#9 to PO#12.

When sub-configuration#1 is associated with CSI-RS resource#1 and CSI-RS resource#2, sub-configuration#1 can be further associated with PO#1 and PO#4. When the terminal determines that sub-configuration#1 is activated, after receiving CSI-RS based on CSI-RS resource#1 configuration and CSI-RS resource#2 configuration, channel state information CSI#1 can be determined based on PO#1 and PO#4 and the measurement result of CSI-RS.

When sub-configuration#2 is associated with CSI-RS resource#3, sub-configuration #2 can be further associated with PO #5. When the terminal determines that sub-configuration #2 is activated, after receiving CSI-RS based on CSI-RS resource #3 configuration, channel state information CSI #2 can be determined based on PO #5 and the measurement result of CSI-RS.

When sub-configuration#3 is associated with CSI-RS resource#4, sub-configuration#3 can be further associated with PO#7. When the terminal determines that sub-configuration#3 is activated, after receiving CSI-RS based on CSI-RS resource#4 configuration, channel state information CSI#3 can be determined based on PO#7 and the measurement result of CSI-RS.

The 3 sub-configuration identifiers are in the order of sub-configuration#1, sub-configuration#2, and sub-configuration#3 from small to large, and the corresponding channel state information is in the order of CSI#1, CSI#2, and CSI#3. Under the condition that the 3 sub-configurations are activated, the terminal sends multiple CSIs in the first order, and can first send CSI#1 in the report resources configured in sub-configuration#1, then send CSI#2 in the report resources configured in sub-configuration#2, and finally send CSI#3 in the report resources configured in sub-configuration#3.

In some embodiments, multiple CSIs may be determined based on dynamic signaling (e.g., at least one of DCI and MAC CE). For example, the terminal may first determine multiple sub-configurations based on the configuration information from the network device (e.g., RRC signaling), and determine multiple activated sub-configurations based on the indication information from the network device (e.g., at least one of DCI and MAC CE). For any of the multiple sub-configurations, the terminal may receive CSI-RS on the CSI-RS resource associated with the sub-configuration, determine the measurement result of the CSI-RS, and determine the channel state information based on the adjusted power offset parameter and the measurement result. Then, for multiple sub-configurations, multiple CSIs may be determined, and the determined multiple CSIs may be sent to the network device.

In some embodiments, in addition to determining which channel state information the received multiple CSIs are, based on the first order, the network device may achieve this effect in other ways, which is not limited in the present disclosure.

For example, the network device can configure multiple resources for the terminal to send channel state information. The association exists between the resources and the channel state information. The terminal can send the channel state information on the resources associated with the channel state information. When the network device receives the channel state information, the network device can determine which channel state information the received channel state information is, based on the resource where the channel state information is located.

For example, the network device configures resources for the terminal to send channel state information, and the resources are composed of multiple sub-resources, where the i-th sub-resource is used for sending CSI#i. When the terminal sends CSI#1, CSI#2 and CSI#4 to the network device, the first sub-resource can be used for sending CSI#1, the second sub-resource can be used for sending CSI#2, and the fourth sub-resource can be used for sending CSI#4. The network device can determine that the channel state information received in the first sub-resource is CSI#1, the channel state information received in the second sub-resource is CSI#2, and the channel state information received in the fourth sub-resource is CSI#4.

In some embodiments, receiving the first information determined, based on the power offset parameter, by terminal, including: receiving, in the second order, at least one difference value sent by the terminal.

In some embodiments, the first information includes first channel state information among multiple CSIs, and a difference value between the first channel state information and the second channel state information other than the first channel state information.

In some embodiments, the second order may be configured by the network device, or the second order may be agreed upon by the protocol, or the second order may be determined by the terminal and indicated to the network device. Regardless of which the foregoing manners the second order is determined by, it is known to the network device. Therefore, the network device can determine which channel state information the at least one difference value received corresponds to, based on the second order of receiving multiple CSIs, and then restore the difference value to the corresponding channel state information.

Since the difference value of the channel state information is generally smaller than the channel state information, sending the difference value to the terminal is beneficial for reducing the amount of data required for communication so as to save communication resources.

In addition, the network device also stores the association between the channel state information and the power offset parameter, so the network device can determine the power offset parameter corresponding to each channel state information. Then, when the network device dynamically adjusts the sending power of PDSCH and/or CSI-RS, resulting in the adjustment of the power offset parameter, the network device can determine the channel state information corresponding to the adjusted power offset parameter, and then determine the channel state based on the channel state information.

In some embodiments, the terminal sends the first channel state signal and at least one difference value to the network device in the second order. The first channel state signal and at least one difference value may be sent in multiple sending processes, for example, one difference value is sent in each sending process, and the network device can determine the order of the first channel state signal and the at least one difference value based on the order of the sending processes; or, the first channel state signal and at least one difference value may be carried in an uplink information in one sending process and sent to the network device. In this case, the first channel state signal and the at least one difference value may be set in multiple positions (for example, multiple bits) in the uplink information in the first order, and the network device can determine the order of the first channel state signal and the at least one difference value based on the position of the channel state information in the uplink information.

In some embodiments, the second order includes at least one of:
the order of identifiers of the second channel state information, such as an order of identifiers of the second channel state information from small to large, such as an order of identifiers of the second channel state information from large to small;
the order of sizes of the power offset parameters used for determining the second channel state information, such as an order of sizes of power offset parameters for determining the second channel state information from small to large, such as an order of sizes of power offset parameters for determining the second channel state information from large to small;
the order of identifiers of multiple sub-configurations in the report configuration of the first information, such as the identifiers of the multiple sub-configurations are from small to large, such as the identifiers of the multiple sub-configurations are from large to small.

In some embodiments, the channel state information may include at least one of: RI, PTI, PMI, and CQI.

Taking the PMI in the channel state information as an example, the first channel state information includes the channel state information corresponding to the largest value among multiple CSIs, and the PMI may be a value used for determining the PM.

For example, each channel state information includes a PMI, so the multiple CSIs may include multiple PMIs, the first channel state information may be the PMI corresponding to the largest value among the multiple PMIs, and the second channel state information may be the PMI other than PMI#0 among the multiple PMIs.

For example, the multiple PMIs are 3 PMIs, namely PMI#1, PMI#2 and PMI#4, where the PMI corresponding to the largest value is PMI#2, then the first channel state information is PMI#2, and the second channel state information includes PMI#1 and PMI#4.

The terminal may determine a difference value D #12 between PMI#1 and PMI#2, and a difference value D #42 between PMI#4 and PMI#2, where the first information includes PMI#2, D#12 and D#42. The terminal may send PMI#2, D#12 and D#42 to the network device in the second order.

For example, when the first channel state information includes the channel state information corresponding to the largest value among the multiple CSIs, the terminal may further send the power offset parameter, corresponding to the channel state information corresponding to the largest value, or the index of the power offset parameter to the network device. The terminal may determine the power offset parameter, corresponding to the channel state information corresponding to the largest value, or the index of the power offset parameter according to a preset association.

For example, the preset association may include channel state information corresponding to power offset parameter values from small to large (or from large to small). Taking small to large as an example, the i-th power offset parameter corresponds to the i-th smallest power offset parameter. For example, taking 4 power offset parameters as an example, from small to large, they are PO#1, PO#2, PO#3 and PO#4, then the first power offset parameter is PO#1, the second power offset parameter is PO#2, the third power offset parameter is PO#3, and the fourth power offset parameter is PO#4. According to the preset association, the network device can determine that the received 4 power offset parameters are PO#1, PO#2, PO#3 and PO#4, respectively.

For example, the preset association may be the power offset parameters corresponding to the channel state information from small to large (or from large to small), and taking small to large as an example, the i-th power offset parameter corresponds to the power offset parameter corresponding to the i-th smallest channel state information. For example, taking the channel state information corresponding to 4 power offset parameters as an example, from small to large, they are CSI#3, CSI#4, CSI#1, and CSI#2, and the power offset parameters corresponding to these 4 channel state information are PO#3, PO#4, PO#1, and PO#2, respectively. Then the first power offset parameter is PO#3, the second power offset parameter is PO#4, the third power offset parameter is PO#1, and the fourth power offset parameter is PO#2. Based on the preset association, the network device can determine that the received 4 power offset parameters are PO#3, PO#4, PO#1, and PO#2, respectively.

For example, the first channel state information may be located at a preset position in the second order, such as at a starting position, or at an ending position. Taking the first channel state information being located at the starting position as an example. The second order includes the order of identifiers of the second channel state information from small to large, the identifier of the second channel state information corresponding to D#12 is 2, and the identifier of the second channel state information corresponding to D#42 is 4. Then in the second order, D#12 is ranked before D#42, and the terminal may send PMI#2, D#12, and D#42 to the network device in the order of PMI#2, D#12, and D#42.

The second order is known to the network device, so the network device can determine, in the second order, that the first PMI sent by the terminal is PMI#2, the second difference value sent by the terminal is D#12, and the third difference value sent by the terminal is D#42. Then the network device can restore the difference value to the corresponding channel state information, for example, the difference value can be added to the first channel state information to obtain the channel state information corresponding to the difference value, for example, for D#12, the PMI#2 and D#12 can be added to obtain PMI#1, and for D#42, the PMI#2 and D#42 can be added to obtain PMI#4.

In addition, the network device also stores an association between the channel state information and the power offset parameter, for example, the association is: PMI#1 is associated with the power offset parameter PO#1, PMI#2 is associated with the power offset parameter PO#2, ..., PMI#n is associated with the power offset parameter PO#n. Then, when the network device dynamically adjusts the sending power of PDSCH and/or CSI-RS, resulting in the adjustment of the power offset parameter, the network device can determine the adjusted power offset parameter. For example, the adjusted power offset parameter is PO#2, then based on the foregoing association, the channel state information can be further determined to be PMI#2, so that the channel state can be determined based on PMI#2 (other information in the channel state information where PMI#2 is located can also be considered).

In some embodiments, when receiving the first channel state information sent by the terminal, the network device may also receive a power offset parameter sent by the terminal for determining the first channel state information, so that the network device can accurately determine the power offset parameter associated with the first channel state information.

In some embodiments, in addition to determining which channel state information the at least one received difference value corresponds to, in the second order, the network device may also achieve this effect in other ways, which is not limited in the present disclosure.

For example, the network device can configure multiple resources for the terminal to send channel state information. The association exists between the resources and the channel state information. The terminal can send the first channel state information and at least one difference value in the resources associated with the channel state information. When the network device receives the channel state information, the network device can determine which channel state information the received difference corresponds to, based on the resource where the channel state information is located.

For example, the network device configures n resources for the terminal to send channel state information, and the resources are composed of multiple sub-resources, where the i-th sub-resource is used for sending CSI#i. When the terminal sends PMI#1, PMI#2 and PMI#4 to the network device, the first sub-resource can be used for sending PMI#2, the second sub-resource can be used for sending D#12, and the fourth sub-resource can be used for sending D#42. The network device can determine that the channel state information received in the first sub-resource is PMI#2, the channel state information received in the second sub-resource is D#12, and the channel state information received in the fourth sub-resource is D#42.

It should be noted that for other contents involved in these embodiments, please refer to the description of the relevant contents in the foregoing embodiments, which will not be elaborated here.

Corresponding to the foregoing embodiments of the information sending method and the information receiving method, the present disclosure also provides embodiments of a terminal and a network device.

Fig. 11 is a schematic block diagram of a terminal according to some embodiments of the present disclosure. As shown in Fig. 11, the terminal includes: at least one of a processing module 1101, a sending module 1102, and the like.

In some embodiments, the processing module is configured to execute at least one of the processing steps performed by the terminal in any of the foregoing information sending methods.

In some embodiments, the sending module is configured to execute at least one of the communication steps such as sending performed by the terminal in any of the foregoing information sending methods.

In some embodiments, the processing module is configured to determine the first information based on the power offset parameter;

In some embodiments, the sending module is configured to send the first information to a network device, where the first information is used for determining channel state information.

In some embodiments, the power offset parameter is dynamically adjustable.

In some embodiments, the processing module is configured to determine an adjusted power offset parameter based on indication information from a network device; and determine the first information based on the adjusted power offset parameter.

In some embodiments, the indication information indicates at least one of: an adjusted power offset parameter; an offset of the adjusted power offset parameter relative to the power offset parameter before adjustment; or an offset of the adjusted power offset parameter relative to a preset power offset parameter.

In some embodiments, the indication information is carried in at least one of: radio resource control signaling; downlink control information; or media access control layer control element.

In some embodiments, the downlink control information includes at least one of: downlink control information in a terminal-specific search space; or downlink control information in a common search space.

In some embodiments, the terminal sends the first information based on a report configuration of the first information, the report configuration includes multiple sub-configurations, and the sub-configurations are associated with a power offset parameter.

In some embodiments, the processing module is configured to determine an activated sub-configuration among at least one sub-configuration based on indication information from a network device; and determine a power offset parameter associated with the activated sub-configuration as the adjusted power offset parameter.

In some embodiments, the processing module is configured to determine multiple CSIs based on multiple power offset parameters; and determine the first information based on the multiple CSIs.

In some embodiments, the multiple power offset parameters include at least one of: multiple power offset parameters pre-configured by the network device; or multiple power offset parameters pre-determined according to a protocol agreement.

In some embodiments, the first information includes the multiple CSIs.

In some embodiments, the sending module is configured to send the multiple CSIs to the network device in a first order.

In some embodiments, the first order includes at least one of: the order of identifiers of the multiple CSIs; the order of sizes of multiple power offset parameters used for determining the multiple CSIs; or the order of identifiers of multiple sub-configurations in the report configuration of the first information.

In some embodiments, the first information includes first channel state information among the multiple CSIs, and a difference value between the first channel state information and the second channel state information other than the first channel state information.

In some embodiments, the first channel state information includes at least one of: channel state information corresponding to the largest value among the multiple CSIs; channel state information determined based on the largest power offset parameter among the multiple power offset parameters; or channel state information determined based on the smallest power offset parameter among the multiple power offset parameters.

In some embodiments, the sending module is configured to send at least one difference value to the network device in a second order.

In some embodiments, the second order includes at least one of: an order of identifiers of the second channel state information; an order of sizes of the power offset parameters used for determining the second channel state information; and an order of identifiers of multiple sub-configurations in the report configuration of the first information.

It should be noted that the terminal may not be limited to including the foregoing processing module and sending module, for example, it may also include a display module, and the like, and is not limited in the present disclosure.

Fig. 12 is a schematic block diagram of a network device according to some embodiments of the present disclosure. As shown in Fig. 12, the network device includes: at least one of a sending module 1201 and a receiving module 1202.

In some embodiments, the sending module is configured to execute at least one of the communication steps such as sending performed by the network device in any of the foregoing information sending methods.

In some embodiments, the receiving module is configured to execute at least one of the communication steps such as receiving performed by the network device in any of the foregoing information sending methods.

In some embodiments, the sending module is configured to send the power offset parameter to the terminal;

In some embodiments, the receiving module is configured to receive first information determined, based on the power offset parameter, by the terminal, where the first information is used for determining channel state information.

In some embodiments, the power offset parameter is dynamically adjustable.

In some embodiments, the sending module is further configured to send indication information to the terminal, where the indication information is used for determining the adjusted power offset parameter.

In some embodiments, the receiving module is configured to receive the first information determined by the terminal based on the adjusted power offset parameter.

In some embodiments, the indication information indicates at least one of: an adjusted power offset parameter; an offset of the adjusted power offset parameter relative to a power offset parameter before adjustment; or an offset of the adjusted power offset parameter relative to a preset power offset parameter.

In some embodiments, the indication information is carried in at least one of: radio resource control signaling; downlink control information; media access control layer control element.

In some embodiments, the downlink control information includes at least one of: downlink control information in a terminal-specific search space; or downlink control information in a common search space.

In some embodiments, the sending module is further configured to send a report configuration of the first information to the terminal, where the report configuration includes multiple sub-configurations, and the sub-configurations are associated with power offset parameters.

In some embodiments, the apparatus further includes: a processing module configured to determine multiple CSIs based on the first information.

In some embodiments, the first information includes the multiple CSIs.

In some embodiments, the receiving module is configured to receive, in a first order, the multiple CSIs sent by the terminal .

In some embodiments, the first order includes at least one of: the order of identifiers of the multiple CSIs; the order of sizes of the multiple power offset parameters used for determining the multiple CSIs; the order of identifiers of multiple sub-configurations in the report configuration of the first information.

In some embodiments, the first information includes first channel state information among the multiple CSIs, and a difference value between the first channel state information and the second channel state information other than the first channel state information.

In some embodiments, the first channel state information includes at least one of: channel state information corresponding to the largest value among the multiple CSIs; channel state information determined based on the largest power offset parameter among the multiple power offset parameters; or channel state information determined based on the smallest power offset parameter among the multiple power offset parameters.

In some embodiments, the receiving module is configured to receive, in a second order, at least one difference value sent by the terminal.

In some embodiments, the second order includes at least one of: an order of identifiers of the second channel state information; an order of sizes of power offset parameters used for determining the second channel state information; and an order of identifiers of multiple sub-configurations in a report configuration of the first information.

It should be noted that the network device may not be limited to including the foregoing receiving module and sending module, for example, it may also include other modules, and the like, and is not limited in the present disclosure.

For the apparatus embodiment, since it basically corresponds to the method embodiment, with respect to the relevant parts, the partial description of the method embodiment can be referred to. The device embodiment described foregoing is only schematic, where the modules described as separate components may or may not be physically separated, and the components displayed as modules may or may not be physical modules, that is, they may be located in one place, or they may be distributed on multiple network modules. Some or all of the modules may be selected according to actual needs to achieve the purpose of the scheme of these embodiments. Those skilled in this art can understand and implement it without paying creative work.

These embodiments of the present disclosure also provide an apparatus for implementing any of the foregoing methods, for example, an apparatus is provided, the foregoing apparatus includes a unit or module for implementing each step performed by the terminal in any of the foregoing methods. For another example, another apparatus is also provided, including a unit or module for implementing each step performed by a network device (such as an access network device, a core network function node, a core network device, and the like) in any of the foregoing methods.

It should be understood that the division of the units or modules in the foregoing device is only a division of logical functions, and in actual implementation, they can be fully or partially integrated into one physical entity, or they can be physically separated. In addition, the units or modules in the apparatus can be implemented in the form of a processor invoking software: for example, the apparatus includes a processor, the processor is connected to a memory, and instructions are stored in the memory. The processor invokes the instructions stored in the memory to implement any of the foregoing methods or implement the functions of the units or modules of the foregoing apparatus, where the processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The foregoing hardware circuits can be understood as one or more processors; for example, in one implementation, the foregoing hardware circuit is an application-specific integrated circuit (ASIC), and the functions of some or all of the foregoing units or modules are realized by designing the logical relationship of the components in the circuit; for example, in another implementation, the foregoing hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the foregoing units or modules. All units or modules of the foregoing apparatus can be realized in the form of a processor invoking software, or in the form of a hardware circuit, or in part by a processor invoking software, and the rest by a hardware circuit.

In the disclosed embodiment, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), and the like; in another implementation, the processor may realize certain functions through the logical relationship of the hardware circuit, and the logical relationship of the foregoing hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the foregoing units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

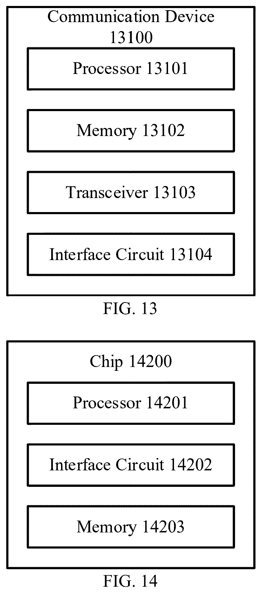

FIG. 13 is a structure schematic diagram of a communication device according to some embodiments of the present disclosure. The communication device 13100 may be a network device (e.g., an access network device, a core network device, and the like), or a terminal (e.g., a user device, and the like), or a chip, a chip system, or a processor that supports a network device to implement any of the foregoing methods, or a chip, a chip system, or a processor that supports a terminal to implement any of the foregoing methods. The communication device 13100 may be configured to implement the method described in the foregoing method embodiment, and the details may refer to the description in the foregoing method embodiment.

As shown in FIG. 13, the communication device 13100 includes one or more processors 13101. The processor 13101 may be a general-purpose processor or a dedicated processor, for example, a baseband processor or a central processing unit. The baseband processor may be configured to process the communication protocol and the communication data, and the central processing unit may be configured to control the communication apparatus (such as a base station, a baseband chip, a terminal device, a terminal device chip, a DU or a CU, and the like), execute a program, and process the data of the program. The processor 13101 is configured to invoke instructions so that the communication device 13100 executes any of the foregoing methods.

In some embodiments, the communication device 13100 further includes one or more memories 13102 for storing instructions. Optionally, all or part of the memory 13102 may also be outside the communication device 13100.

In some embodiments, the communication device 13100 further includes one or more transceivers 13103. When the communication device 13100 includes one or more transceivers 13103, the communication steps such as sending and receiving in the foregoing method are executed by the transceiver 13103, and the other steps are executed by the processor 13101.

In some embodiments, the transceiver may include a receiver and a transmitter, and the receiver and the transmitter may be separate or integrated. Optionally, the terms such as transceiver, transceiver unit, transceiver, transceiver circuit, and the like, may be replaced with each other, the terms such as transmitter, transmission unit, transmitter, transmission circuit, and the like, may be replaced with each other, and the terms such as receiver, receiving unit, receiver, receiving circuit, and the like, may be replaced with each other.

Optionally, the communication device 13100 further includes one or more interface circuits 13104, connected to the memory 13102. The interface circuit 13104 can be used for receiving signals from the memory 13102 or other apparatus, and can be used for sending signals to the memory 13102 or other apparatus. For example, the interface circuit 13104 can read instructions stored in the memory 13102 and send the instructions to the processor 13101.

The communication device 13100 described in the foregoing embodiments may be a network device or a terminal, but the scope of the communication device 13100 described in the present disclosure is not limited thereto, and the structure of the communication device 13100 may not be limited by FIG. 13. The communication device may be an independent device or may be part of a larger device. For example, the communication device may be: 1) an independent integrated circuit IC, or a chip, or a chip system or subsystem; (2) a collection of one or more ICs, optionally, the foregoing IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, and the like; (6) others, and the like.

Fig. 14 is a structure schematic diagram of a chip according to some embodiments of the present disclosure. In the case where the communication device 13100 may be a chip or a chip system, the schematic diagram of the structure of the chip 14200 shown in Fig. 14 can be referred to, which is not limited in the present disclosure.

The chip 14200 includes one or more processors 14201, and the processor 14201 is used for invoking instructions so that the chip 14200 executes any of the foregoing methods.

In some embodiments, the chip 14200 further includes one or more interface circuits 14202, the interface circuits 14202 are connected to the memory 14203, the interface circuits 14202 can be used for receiving signals from the memory 14203 or other apparatus, and the interface circuits 14202 can be used for sending signals to the memory

14203 or other apparatus. For example, the interface circuit 14202 can read the instructions stored in the memory 14203 and send the instructions to the processor 14201. Optionally, the terms such as interface circuit, interface, transceiver pin, transceiver, and the like can be replaced with each other.

In some embodiments, the chip 14200 further includes one or more memories 14203 for storing instructions. Optionally, all or part of the memory 14203 may be outside the chip 14200.

The present disclosure also provides a storage medium, on which instructions are stored, and when the instructions are executed on the communication device 13100, the communication device 13100 executes any of the foregoing methods. Optionally, the storage medium is an electronic storage medium. Optionally, the storage medium is a computerreadable storage medium, but is not limited to this. It can also be a storage medium readable by other apparatus. Optionally, the storage medium can be a non-transitory storage medium, but is not limited to this, and it can also be a temporary storage medium.

The present disclosure also provides a program product, which, when executed by the communication device 13100, enables the communication device 13100 to execute any of the foregoing methods. Optionally, the program product is a computer program product.

The present disclosure also provides a computer program, which, when executed on a computer, enables the computer to execute any one of the foregoing methods.

## Claims

1. An information sending method, wherein the method is executed by a terminal and comprises:
determining first information based on a power offset parameter; and
sending the first information to a network device, wherein the first information is used for determining channel state information (CSI).

2. The method according to claim 1, wherein the power offset parameter is dynamically adjustable.

3. The method according to claim 1 or 2, wherein determining the first information based on the power offset parameter comprises:
determining an adjusted power offset parameter based on indication information from the network device; and
determining the first information based on the adjusted power offset parameter.

4. The method according to claim 3, wherein the indication information indicates at least one of:
the adjusted power offset parameter;
an offset of the adjusted power offset parameter relative to a power offset parameter before adjustment; or
an offset of the adjusted power offset parameter relative to a preset power offset parameter.

5. The method according to claim 3 or 4, wherein the indication information is carried in at least one of:
radio resource control signaling;
downlink control information; or
media access control layer control element.

6. The method according to claim 5, wherein the downlink control information comprises at least one of:
downlink control information in a terminal-specific search space; or
downlink control information in a common search space.

7. The method according to claim 4, wherein the terminal sends the first information based on a report configuration of the first information, wherein the report configuration comprises multiple sub-configurations, and the sub-configurations are associated with the power offset parameter.

8. The method according to claim 7, wherein determining the adjusted power offset parameter based on the indication information from the network device comprises:
determining an activated sub-configuration among at least one sub-configuration based on the indication information from the network device; and
determining a power offset parameter associated with the activated sub-configuration as the adjusted power offset parameter.

9. The method according to claim 1 or 2, wherein determining the first information based on the power offset parameter comprises:
determining multiple CSIs based on multiple power offset parameters; and
determining the first information based on the multiple CSIs.

10. The method according to claim 9, wherein the multiple power offset parameters comprise at least one of:
multiple power offset parameters pre-configured by the network device; or
multiple power offset parameters pre-determined based on a protocol agreement.

11. The method according to claim 9 or 10, wherein the first information comprises the multiple CSIs.

12. The method according to claim 11, wherein sending the first information to the network device comprises:
sending the multiple CSIs to the network device in a first order.

13. The method according to claim 12, wherein the first order comprises at least one of:
an order of identifiers of the multiple CSIs;
an order of sizes of the multiple power offset parameters used for determining the multiple CSIs; or
an order of identifiers of multiple sub-configurations in the report configuration of the first information.

14. The method according to claim 9 or 10, wherein the first information comprises first channel state information among the multiple CSIs, and a difference value between second channel state information, other than the first channel state information, and the first channel state information.

15. The method according to claim 14, wherein the first channel state information comprises at least one of:
channel state information corresponding to a largest value among the multiple CSIs;
channel state information determined based on a largest power offset parameter among the multiple power offset parameters; or
channel state information determined based on a smallest power offset parameter among the multiple power offset parameters.

16. The method according to claim 14 or 15, wherein sending the first information to the network device comprises:
sending at least one difference value to the network device in a second order.

17. The method according to claim 16, wherein the second order comprises at least one of:
an order of identifiers of the second channel state information;
an order of sizes of the power offset parameters used for determining the second channel state information; or
an order of identifiers of multiple sub-configurations in the report configuration of the first information.

18. An information receiving method, wherein the method is executed by a network device and comprises:
sending a power offset parameter to a terminal; and
receiving first information determined, based on the power offset parameter, by the terminal, wherein the first information is used for determining channel state information (CSI).

19. The method according to claim 18, wherein the power offset parameter is dynamically adjustable.

20. The method according to claim 18 or 19, wherein the method further comprises:
sending indication information to the terminal, wherein the indication information is used for determining an adjusted power offset parameter.

21. The method according to claim 20, wherein receiving the first information determined, based on the power offset parameter, by the terminal comprises:
receiving the first information determined, based on the adjusted power offset parameter, by the terminal.

22. The method according to claim 20 or 21, wherein the indication information indicates at least one of:
the adjusted power offset parameter;
an offset of the adjusted power offset parameter relative to a power offset parameter before adjustment; or
an offset of the adjusted power offset parameter relative to a preset power offset parameter.

23. The method according to any one of claims 20 to 22, wherein the indication information is carried in at least one of:
radio resource control signaling;
downlink control information; or
media access control layer control element.

24. The method according to claim 23, wherein the downlink control information comprises at least one of:
downlink control information in a terminal-specific search space; or
downlink control information in a common search space.

25. The method according to claim 20 or 21, wherein the method further comprises:
sending a report configuration of the first information to the terminal, wherein the report configuration comprises multiple sub-configurations, and the sub-configurations are associated with the power offset parameter.

26. The method according to claim 18 or 19, wherein the method further comprises:
determining multiple CSIs based on the first information.

27. The method according to claim 26, wherein the first information comprises the multiple CSIs.

28. The method according to claim 27, wherein receiving the first information determined, based on the power offset parameter, by the terminal comprises:
receiving, in a first order, the multiple CSIs sent by the terminal.

29. The method according to claim 28, wherein the first order comprises at least one of:
an order of identifiers of the multiple CSIs;
an order of sizes of the multiple power offset parameters used for determining the multiple CSIs; or
an order of identifiers of multiple sub-configurations in the report configuration of the first information.

30. The method according to claim 26, wherein the first information comprises first channel state information among the multiple CSIs, and a difference value between second channel state information, other than the first channel state information, and the first channel state information.

31. The method according to claim 30, wherein the first channel state information comprises at least one of:
channel state information corresponding to a largest value among the multiple CSIs;
channel state information determined based on a largest power offset parameter among the multiple power offset parameters; or
channel state information determined based on a smallest power offset parameter among the multiple power offset parameters.

32. The method according to claim 30 or 31, wherein receiving the first information determined, based on the power offset parameter, by the terminal comprises:
receiving, in a second order, at least one difference value sent by the terminal.

33. The method according to claim 32, wherein the second order comprises at least one of:
an order of identifiers of the second channel state information;
an order of sizes of the power offset parameters used for determining the second channel state information; or
an order of identifiers of multiple sub-configurations in the report configuration of the first information.

34. An information sending method, wherein the method comprises:
sending, by a network device, a power offset parameter to a terminal;
determining, by the terminal, first information based on the power offset parameter; and
sending, by the terminal, the first information to the network device, wherein the first information is used for determining channel state information.

35. A terminal, wherein the terminal comprises:
one or more processors;
wherein the terminal is configured to execute the information sending method according to any one of claims 1 to 17.

36. A network device, wherein the network device comprises:
one or more processors;
wherein the network device is configured to execute the information receiving method according to any one of claims 18 to 33.

37. A communication device, wherein the communication device comprises:
one or more processors;
wherein the processor is configured to invoke instructions, thereby causing the communication device to execute the information sending method according to any one of claims 1 to 17 and/or the information receiving method according to any one of claims 18 to 33.

38. A communication system, wherein the communication system comprises a terminal and a network device, wherein the terminal is configured to implement the information sending method according to any one of claims 1 to 17, and the network device is configured to implement the information receiving method according to any one of claims 18 to 33.

39. A storage medium, wherein the storage medium stores instructions, wherein the instructions, when running on a communication device, cause the communication device to execute the information sending method according to any one of claims 1 to 17 and/or the information receiving method according to any one of claims 18 to 33.
